# EUROPÄISCHE PATENTSCHRIFT

(11) **EP 3 763 966 B1**
(45) Veröffentlichungstag und Bekanntmachung des Hinweises auf die Patenterteilung: **11.09.2024**
(21) Anmeldenummer: 19185745.7
(22) Anmeldetag: 11.07.2019
(51) Int. Cl.: F16F 15/067, B65G 27/08

(54) **AUFHÄNGUNGSSET UND VIBRATIONSFÖRDERER**
SUSPENSION SET AND VIBRATORY CONVEYOR
ENSEMBLE DE SUSPENSION ET TRANSPORTEUR À VIBRATIONS

(43) Veröffentlichungstag der Anmeldung: 13.01.2021
(73) Patentinhaber: Rhein-Nadel Automation GmbH, 52068 Aachen (DE)
(72) Erfinder: Reiners, Hans-Josef, 41836 Hückelhoven (DE); Kirch, Oliver, 52249 Eschweiler (DE)
(74) Vertreter: Brötz, Helmut

(56) Entgegenhaltungen:
- EP-A1- 0 327 372
- EP-A1- 1 899 245
- EP-A1- 3 495 685
- DE-A1- 102005 031 714
- DE-C2- 4 312 711

## Beschreibung

### Gebiet der Technik

Die Erfindung betrifft gemäß einem ersten Aspekt ein Aufhängungsset, vorzugsweise für einen Vibrationsförderer.

Gemäß einem zweiten Aspekt betrifft die Erfindung einen Vibrationsförderer, aufweisend einen Schwinger, eine Gegenmasse, eine Maschinenbasis, eine Aufhängungseinrichtung und einen Vibrationsantrieb, wobei der Schwinger mittels einer ersten Federgruppe mit der Gegenmasse verbunden und relativ zu der Gegenmasse beweglich gehalten ist, wobei der Schwinger mittels des Vibrationsantriebs antreibbar ist, wobei die Gegenmasse mittels der Aufhängungseinrichtung mit der Maschinenbasis verbunden und relativ zu der Maschinenbasis beweglich gehalten ist, wobei die Aufhängungseinrichtung mehrere Aufhängungseinheiten umfasst, von denen jede Aufhängungseinheit einen Träger, eine Feder, ein erstes Federanschlussteil und ein zweites Federanschlussteil aufweist, wobei deren Träger einen ersten Trägerendabschnitt und einen zweiten Trägerendabschnitt aufweist, wobei deren Feder einen ersten Federendabschnitt und einen zweiten Federendabschnitt aufweist, wobei die Federn der Aufhängungseinheiten eine zweite Federgruppe bilden, wobei an einer jeweiligen Aufhängungseinheit der erste Trägerendabschnitt mittels des ersten Federanschlussteils mit dem ersten Federendabschnitt gekoppelt ist, der zweite Trägerendabschnitt mit der Maschinenbasis verbunden ist und das zweite Federanschlussteil mit der Gegenmasse verbunden ist.

### Stand der Technik

Aus DE 43 12 711 C2 ist ein Vibrationsförderer bekannt, dessen Werkstückführungsbahn horizontal verläuft. Bei einem solchen Vibrationsförderer treibt der Vibrationsantrieb den Schwinger zum Fördern, also zum Transportieren der Werkstücke, zu einer solchen Schwingungsform an, so dass das Fördergut zu einem Mikro-Parabelwurf anregt wird. Somit ist zum Fördern kein geometrisches Gefälle der Werkstückführungsbahn nötig. Bei dem aus DE 43 12 711 C2 bekannten Vibrationsförderer ist ein Schwinger federnd an einem Grundgestell gehalten, das auf Gummipuffern auf einem Untergrund abgestützt ist. Eine solche Abstützung war in der Praxis bisher ausreichend, um eine schwingungsmäßige Entkopplung zwischen einem Untergrund, der zur Aufstellung dient, und dem Grundgestell mit dem Schwinger zu erreichen. In jüngerer Zeit werden Vibrationsförderer aber zunehmend größer und leistungsfähiger ausgeführt, wobei nun mitunter eine als ungenügend empfundene Schwingungsentkopplung von einem Fundament, eine Lärmentwicklung und eine Erwärmung der Gummipuffer, die zu Ungenauigkeiten, insbesondere am Übergang zu benachbarten Baugruppen, führen kann, festgestellt werden.

EP 1899245 A1 offenbart einen Linear-Vibrationsförderer, dessen Werkstückführungsbahn mit einem Neigungswinkel von 7 -10 Grad verläuft, so dass die Werkstücke des Förderguts bereits mittels im Wesentlichen in einer Ebene verlaufenden Schwingungen des Schwingers transportiert werden können. Dabei kann ein Mikrowurf entweder ganz entfallen oder auf ein Minimum reduziert werden. Der Schwinger ist mittels Blattfedern, die eine erste Federgruppe bilden, schwingfähig an einer Gegenmasse gehalten. Der Vibrationsförderer umfasst vier senkrechte Träger, die sich jeweils von einer Grundplatte durch das Innere des Schwingers der Gegenmasse nach oben erstrecken. Je zwei paarweise benachbarte Träger sind an ihrem oberen Längsende durch einen Querträger verbunden. Die Gegenmasse ist an den Querträgern aufgehängt, indem Federn einer zweiten Federgruppe an ihrem einen Federende an einem der Querträger und an ihrem anderen Ende an der Gegenmasse gehalten sind. Die zur Aufhängung der Gegenmasse dienenden Federn sind weniger träge als die oben genannten, sonst zur Abstützung dienenden Pufferfüße, so dass eine vergleichsweise geringere Resonanzwirkung und somit geringere Lärmemission resultiert. Außerdem kann aufgrund der im Vergleich zu Pufferfüßen geringeren Trägheit der zur Aufhängung der Gegenmasse dienenden Federn auch die Schwingungsübertragung in den Untergrund bzw. in ein Fundament deutlich verringert werden. Andererseits besitzt der aus EP 1 899 245 B1 bekannte Vibrationsförderer einen vergleichsweise komplizierten konstruktiven Aufbau, bei dem sich die vier senkrechten Träger, die gleichsam ein Stativ zur Federaufhängung bilden, senkrecht durch das Innere der Gegenmasse und des Schwingers erstrecken, und wobei die o.g. Querträger sogar quer durch Ausnehmungen in der Gegenmasse und in dem Schwinger verlaufen. Die Federaufhängung ist fest in den Vibrationsförderer integriert, zumal sie auch für die Statik und den Zusammenhalt von gewisser Bedeutung ist. Auch die Montage eines solchen Vibrationsförderers ist aufwendig. Hinzu kommt, dass aufgrund dieser Komplexität die an sich vorteilhafte Federaufhängung der Gegenmasse nicht ohne Weiteres auf andere Vibrationsförderer, insbesondere nicht auf schon vorhandene Vibrationsförderer, übertragen werden kann.
EP 0 327 372 A1 offenbart einen piezoelektrischen Vibrationsgenerator gemäß dem Oberbegriff von Anspruch 1.

### Zusammenfassung der Erfindung

Vor obigem Hintergrund liegt einem Aspekt der Erfindung die Aufgabe zugrunde, eine Möglichkeit zu schaffen, Vibrationsförderer, insbesondere auf Puffern abgestützte Vibrationsförderer, vorteilhaft, insbesondere nachträglich, so weiterzubilden, dass die zuvor beschriebenen Nachteile und Einschränkungen zumindest teilweise, insbesondere vollständig, vermieden werden können. Vor obigem Hintergrund liegt einem weiteren Aspekt der Erfindung die Aufgabe zugrunde, einen Vibrationsförderer anzugeben, der gegenüber den bekannten Vibrationsförderern vorteilhaft weitergebildet ist. Insbesondere wird dadurch angestrebt, dass dadurch die beschriebenen Einschränkungen und Nachteile zumindest teilweise, insbesondere vollständig, vermieden werden können.

Betreffend ihren ersten, ein Aufhängungsset betreffenden Aspekt schlägt die Erfindung zur Lösung der Aufgabe gemäß Anspruch 1 ein Aufhängungsset vor, das mehrere Aufhängungseinheiten umfasst, von denen jede Aufhängungseinheit einen Träger, eine Feder sowie ein erstes Federanschlussteil und ein zweites Federanschlussteil aufweist, wobei der Träger einen ersten Trägerendabschnitt und einen zweiten Trägerendabschnitt aufweist, wobei die Feder einen ersten Federendabschnitt und einen zweiten Federendabschnitt aufweist und wobei der erste Trägerendabschnitt mittels des ersten Federanschlussteils mit dem ersten Federendabschnitt gekoppelt ist, wobei entweder die Aufhängungseinheiten voneinander getrennt sind oder die Aufhängungseinheiten paarweise nur mittels einer direkten oder indirekten Verbindung ihrer jeweiligen zweiten Trägerendabschnitte miteinander verbunden sind oder die Aufhängungseinheiten paarweise nur mittels einer direkten oder indirekten Verbindung ihrer jeweiligen zweiten Federanschlussteile miteinander verbunden sind und wobei es sich bei den Federn um Zylinderfedern, insbesondere um Zylinderdruckfedern, handelt. Bei Verwendung solcher Federn kann im Vergleich zu Pufferfüßen die Schwingungsübertragung in das Fundament bzw. in ein Maschinengestell deutlich verringert werden, so dass im Betrieb höhere Schwingungs- bzw. Vibrations-Amplituden möglich sind. Vorzugsweise werden Federn gewählt, deren Materialbeschaffenheit bei Vibration zu keiner signifikanten mechanischen und maßlichen Veränderung führt, so dass insofern keine nachteiligen Auswirkungen an Übergängen zu benachbarten Baugruppen bestehen.
Betreffend ihren ersten, ein Aufhängungsset betreffenden Aspekt schlägt die Erfindung zur Lösung der Aufgabe alternativ gemäß Anspruch 2 ein Aufhängungsset vor, das mehrere Aufhängungseinheiten umfasst, von denen jede Aufhängungseinheit einen Träger, eine Feder sowie ein erstes Federanschlussteil und ein zweites Federanschlussteil aufweist, wobei der Träger einen ersten Trägerendabschnitt und einen zweiten Trägerendabschnitt aufweist, wobei die Feder einen ersten Federendabschnitt und einen zweiten Federendabschnitt aufweist und wobei der erste Trägerendabschnitt mittels des ersten Federanschlussteils mit dem ersten Federendabschnitt gekoppelt ist, wobei die Aufhängungseinheiten paarweise nur mittels einer direkten oder indirekten Verbindung ihrer jeweiligen zweiten Trägerendabschnitte miteinander und mittels einer direkten oder indirekten Verbindung ihrer jeweiligen zweiten Federanschlussteile miteinander verbunden sind, wobei das Aufhängungsset eine Aufhängungsbaugruppe oder zwei oder mehr Aufhängungsbaugruppen umfasst, wobei jede Aufhängungsbaugruppe eine erste Aufhängungseinheit und eine zweite Aufhängungseinheit aufweist, wobei jede Aufhängungsbaugruppe eine Stützplatte umfasst und wobei betreffend eine jeweilige Aufhängungsbaugruppe die Feder der ersten Aufhängungseinheit an ihrem zweiten Federendabschnitt mittels des zweiten Federanschlussteils der ersten Aufhängungseinheit an die Stützplatte an einer ersten Seite der Stützplatte angeschlossen ist und die Feder der zweiten Aufhängungseinheit an ihrem zweiten Federendabschnitt mittels des zweiten Federanschlussteils der zweiten Aufhängungseinheit an die Stützplatte an einer zu der ersten Seite entgegengesetzten, zweiten Seite der Stützplatte angeschlossen ist.

Ein erfindungsgemäßes Aufhängungsset ermöglicht im Vergleich zu dem aus EP 1 899 245 B1 bekannten Vibrationsförderer einen vorteilhafteren Aufbau eines Vibrationsförderers. Der Aufbau lässt sich deutlich vereinfachen, indem durch die Erfindung vermieden werden kann, dass sich Träger durch den Schwinger und durch die Gegenmasse erstrecken. Stattdessen können die Träger vollständig oder zu einem überwiegenden Anteil seitlich des Schwingers und der Gegenmasse angeordnet sein. Dies ermöglicht einerseits vorteilhaft, dass die zweiten Trägerendabschnitte seitlich des Schwingers und der Gegenmasse an einer Maschinenbasis befestigt werden können, was den Aufbau und auch die Montage vereinfacht. Zusätzlich kann vorteilhaft vermieden werden, dass sich von den Trägern gehaltene Querträger, an denen die Federn der zweiten Federgruppe aufgehängt sind, durch Aussparungen in Wangen der Gegenmasse und in Längsträgern des Schwingers erstrecken. Auch dies vereinfacht nicht nur den Aufbau, sondern auch die Montage eines Vibrationsförderers.

Darüber hinaus eignet sich ein erfindungsgemäßes Aufhängungsset nicht nur zum Gebrauch bei der erstmaligen Montage eines Vibrationsförderers, sondern die Erfindung eröffnet zusätzlich auch die Möglichkeit, dass ein erfindungsgemäßes Aufhängungsset zum nachträglichen Umbau bzw. zu einer Nachrüstung an einem vorhandenen, zum Beispiel aus DE 43 12 711 C2 bekannten, Vibrationsförderer eingesetzt wird. Dazu kann bspw. das in DE 43 12 711 C2 beschriebene Untergestell als Gegenmasse an den Federn der Aufhängungseinheiten des erfindungsgemäßen Aufhängungssets schwingfähig aufgehängt werden, während die Träger an den zweiten Trägerendabschnitten mit einer Maschinenbasis, bspw. mit einer Grundplatte, verbunden, zum Beispiel verschraubt werden können. Im Zusammenhang damit können evtl. vorhandene pufferförmige Stützfüße von dem Untergestell entfernt werden. Durch den Einsatz von hängenden Federn zur Aufhängung der Gegenmasse wird im Vergleich zu pufferartigen Stützfüßen die Übertragung von Schwingungen auf das Maschinengestell und somit auf den Untergrund erheblich reduziert. Insofern stellt die Erfindung eine schwingungsarme Aufhängung sowohl für neu konzipierte, als auch für schon existierende Vibrationsförderer bereit. Das Aufhängungsset ermöglicht einen seitlichen Anbau der Aufhängungseinheiten, ohne dass in das Innere des Vibrationsförderers eingegriffen werden muss. Es besteht so die Möglichkeit einer einfachen Montage, bei Bedarf auch einer nachträglichen Montage. Ein erfindungsgemäßes Aufhängungsset bietet bei vorhandenen wie auch bei neu konzipierten Vibrationsförderern die Möglichkeit einer adaptiven Montage, kann also an verschiedene Bauformen angepasst werden. Da die Träger außerhalb des Schwingers und außerhalb der Gegenmasse angeordnet sein können, ist eine besonders einfache Montage möglich.

Nachfolgend werden exemplarisch bevorzugte Möglichkeiten zur zweckmäßigen und vorteilhaften Weiterbildung vorgestellt:

Bevorzugt ist, dass an jeder Aufhängungseinheit der Träger an dem zweiten Trägerendabschnitt ein Befestigungsmittel aufweist oder mit einem Befestigungsmittel verbunden ist, insbesondere zur Befestigung an einer Maschinenbasis eines Vibrationsförderers. Bei dem Befestigungsmittel kann es sich zum Beispiel um eine Durchsteckbohrung oder um eine Gewindebohrung für eine Schraubverbindung handeln.

Zur vorteilhaften Ausgestaltung ist auch bevorzugt, dass sich betreffend eine jeweilige Aufhängungseinheit ihre Feder entlang, insbesondere parallel zu, einem Längsabschnitt ihres Trägers erstreckt.

Es besteht die Möglichkeit, dass an jeder Aufhängungseinheit mittels des ersten Federanschlussteils eine erste Umfangs-Klemmhalterung gebildet ist, in welcher der erste Federendabschnitt eingespannt ist, und insbesondere dass mittels des zweiten Federanschlussteils eine zweite Umfangs-Klemmhalterung gebildet ist, in welcher der zweite Federendabschnitt eingespannt ist. Die Federanschlussteile können z.B. als Spannteile, vorzugsweise als Spannplatten, ausgebildet sein. Vorzugsweise kann das Spannteil eine Durchgangsöffnung aufweisen, deren Hohlquerschnitt auf einer Seite unberandet ist und dieser Seite gegenüberliegend halbkreisförmig berandet ist, wobei der zu der Halbkreisform korrespondierende Durchmesser dem Durchmesser der Zylinderfeder entspricht oder im Vergleich dazu um einige hundertstel oder zehntel Millimeter größer ist.

Als zweckmäßig wird angesehen, dass das Aufhängungsset eine Aufhängungsbaugruppe oder zwei oder mehr Aufhängungsbaugruppen umfasst, wobei jede Aufhängungsbaugruppe eine erste Aufhängungseinheit und eine zweite Aufhängungseinheit aufweist. Die hier genannten ersten und zweiten Aufhängungseinheiten zählen zu den eingangs genannten Aufhängungseinheiten. Bevorzugt ist, dass an der ersten Aufhängungseinheit und an der zweiten Aufhängungseinheit an einem mit dem jeweiligen ersten Trägerendabschnitt verbundenen Halteteil oder an dem jeweiligen ersten Trägerendabschnitt eine Gewindedurchgangsbohrung ausgebildet ist und dass durch jede dieser Gewindedurchgangsbohrungen je ein mit Gewinde versehenes Einstellelement, insbesondere ein Schraube, hindurchgeschraubt ist, wobei sich eine jeweilige geometrische Längsachse der Einstellelemente senkrecht zu einer mittig zwischen der ersten Aufhängungseinheit und der zweiten Aufhängungseinheit hindurchführenden geometrischen Mittelebene erstreckt. Die Einstellelemente ermöglichen es vorteilhaft, dass eine lichte Weite zwischen den beiden Aufhängungseinheiten stufenlos eingestellt, also wahlweise verkleinert oder vergrößert werden kann. Wenn das Aufhängungsset an einem Vibrationsförderer montiert ist, bildet es mit seinen Bestandteilen eine Aufhängungseinrichtung des Vibrationsförderers, wobei an jeder Aufhängungseinheit des Aufhängungssets bzw. der Aufhängungseinrichtung ein seitlicher Abstand zwischen dem Halteteil oder dem ersten Trägerendabschnitt zu dem Schwinger oder zu der Gegenmasse des Vibrationsförderers eingestellt werden kann, um Schwingungsamplituden des Vibrationsförderers in seiner zu der Förderrichtung quer orientierten Seitenrichtung zu begrenzen. Bevorzugt ist, dass die beiden genannten geometrischen Längsachsen der Einstellelemente miteinander fluchten.

Bei einem bevorzugten Ausführungsbeispiel ist vorgesehen, dass jede Aufhängungsbaugruppe ein Verbindungsteil aufweist, wobei betreffend eine jeweilige Aufhängungsbaugruppe der zweite Trägerendabschnitt des Trägers der ersten Aufhängungseinheit mit dem Verbindungsteil an einer ersten Seite des Verbindungsteils verbunden ist und der zweite Trägerendabschnitt des Trägers der zweiten Aufhängungseinheit mit dem Verbindungsteil an einer der ersten Seite entgegengesetzten, zweiten Seite des Verbindungsteils verbunden ist. Vorzugsweise weist ein jeweiliges Verbindungsteil Befestigungsmittel, insbesondere zur Befestigung des Verbindungsteils an einer Maschinenbasis eines Vibrationsförderers, auf. Bei den Befestigungsmitteln kann es sich zum Beispiel um, insbesondere mit Gewinde versehene, Durchgangsbohrungen handeln.

Des Weiteren besteht die Möglichkeit, dass betreffend jede Aufhängungseinheit der zweite Trägerendabschnitt des Trägers ein zu der geometrischen Längsachse der Feder quer verlaufendes Trägersegment aufweist, dass zwischen dem Trägersegment und dem zweiten Federanschlussteil ein Spalt gebildet ist und dass sich durch das Trägersegment eine quer zu dem Spalt gerichtete Gewindedurchgangsbohrung erstreckt, durch die ein mit Gewinde versehenes Justierelement, insbesondere eine Schraube, hindurchgeschraubt ist, so dass ein freies Ende des Justierelements in den Spalt hineinragt. Bevorzugt ist, dass eine Spaltweite des Spalts in einer zu der geometrischen Längsachse der Feder parallelen Richtung weniger als 10 mm, insbesondere 5 mm oder etwa 5 mm beträgt, wobei der Begriff etwa vorzugsweise Abweichungen von bis zu 1 mm einschließt.

Zur weiteren Ausgestaltung ist bevorzugt, dass jede Aufhängungsbaugruppe eine Stützplatte umfasst und dass betreffend eine jeweilige Aufhängungsbaugruppe die Feder der ersten Aufhängungseinheit an ihrem zweiten Federendabschnitt mittels des zweiten Federanschlussteils der ersten Aufhängungseinheit an die Stützplatte an einer ersten Seite der Stützplatte angeschlossen ist und die Feder der zweiten Aufhängungseinheit an ihrem zweiten Federendabschnitt mittels des zweiten Federanschlussteils der zweiten Aufhängungseinheit an die Stützplatte an einer zu der ersten Seite entgegengesetzten, zweiten Seite der Stützplatte angeschlossen ist, wobei insbesondere vorgesehen ist, dass in einer zu den geometrischen Längsachsen der Federn parallelen Richtung ein Abstand zwischen dem Verbindungsteil und der Stützplatte weniger als 10 mm, insbesondere 5 mm oder etwa 5 mm beträgt. Auch in diesem Zusammenhang schließt der Begriff "etwa" vorzugsweise Abweichungen von bis zu 1 mm ein.

Alternativ ist bevorzugt, dass das Aufhängungsset Befestigungseinrichtungen umfasst, und dass an jeder Aufhängungseinheit die Feder an ihrem zweiten Federendabschnitt mittels des zweiten Federanschlussteils eine Befestigungseinrichtung angeschlossen oder anschließbar ist.

Ein erfindungsgemäßes Aufhängungsset kann zum Gebrauch bei Linear-Vibrationsförderern und/oder zum Gebrauch bei Rund-Vibrationsförderern angepasst sein.

Betreffend ein Aufhängungsset für einen Rundförderer ist bevorzugt, dass das Aufhängungsset eine ungerade Mehrzahl an baugleichen Aufhängungseinrichtungen, insbesondere genau drei zueinander baugleiche Aufhängungseinrichtungen aufweist.

Betreffend ihren zweiten, einen Vibrationsförderer betreffenden Aspekt schlägt die Erfindung gemäß Anspruch 12 vor, dass der Vibrationsförderer als Linear-Vibrationsförderer ausgebildet ist, wobei ein jeweiliger zweiter Trägerendabschnitt in einer durch ihn führenden Bezugsebene, die zu einer Längsrichtung des Vibrationsförderers quer orientiert ist, außerhalb des Schwingers und insbesondere außerhalb der Gegenmasse angeordnet ist, dadurch gekennzeichnet, dass die Gegenmasse zwei in einer Längsrichtung des Vibrationsförderers orientierte, quer voneinander beabstandete Wangen aufweist, wobei jede der beiden Wangen mit einer Außenseite von ihr eine über ihre Außenseite hinausreichende geometrische Wangenebene aufspannt und dass jeder der zweiten Trägerendabschnitte seitlich außerhalb des von den beiden Wangenebenen berandeten Zwischenraumes angeordnet ist. Dies ermöglicht eine besonders einfache Montage. Betreffend ihren zweiten, einen Vibrationsförderer betreffenden Aspekt schlägt die Erfindung gemäß Anspruch 13 einen Vibrationsförderer vor, der dadurch gekennzeichnet ist, dass der Vibrationsförderer als Rund-Vibrationsförderer ausgebildet ist, wobei ein jeweiliger zweiter Trägerendabschnitt in einer durch ihn führenden Bezugsebene, die zu einer Umfangsrichtung des Rund-Vibrationsförderers quer orientiert ist, außerhalb des Schwingers und außerhalb der Gegenmasse angeordnet ist. Die genannten Bezugsebenen dienen zur Betrachtung der Anordnung der zweiten Trägerendabschnitte. Ein erfindungsgemäßer Vibrationsförderer weist vorzugsweise Bestandteile eines erfindungsgemäßen Aufhängungssets auf. Dabei sind die Bestandteile des Aufhängungssets in den Vibrationsförderer eingebaut und bilden so Bestandteile einer Aufhängungseinrichtung des Vibrationsförderers. Daher werden die Bestandteile eines erfindungsgemäßen Aufhängungssets und die Bestandteile einer erfindungsgemäßen Aufhängungseinrichtung mit den gleichen Begriffen beschrieben und in den Figuren auch mit gleichen Bezugszeichen gezeigt.

Bei einer Ausgestaltung des Vibrationsförderers als Linear-Vibrationsförderer umfasst die Aufhängungseinrichtung vorzugsweise vier Aufhängungseinheiten, während bei einer Ausgestaltung des Vibrationsförderers als Rund-Vibrationsförderer bevorzugt ist, dass die Aufhängungseinrichtung drei Aufhängungseinheiten aufweist. Ein jeweiliger Träger ist mittels seines zweiten Trägerendabschnittes an der Maschinenbasis befestigt. Jeder Träger erstreckt sich ausgehend von seinem zweiten Trägerendabschnitt zu dem ersten Trägerendabschnitt nach oben, vorzugsweise senkrecht nach oben. Insofern kann der erste Trägerendabschnitt als oberer Trägerendabschnitt und der zweite Trägerendabschnitt als unterer Trägerendabschnitt bezeichnet werden. Jeder obere Trägerendabschnitt ist mittels des zugehörigen ersten Federanschlussteils mit der zugehörigen Feder an ihrem ersten Federendabschnitt gekoppelt. Die Feder erstreckt sich ausgehend von ihrem ersten Federendabschnitt zu ihrem zweiten Federendabschnitt nach unten, vorzugsweise senkrecht oder etwa senkrecht nach unten. Insofern kann der erste Federendabschnitt auch als oberer Federendabschnitt und der zweite Federendabschnitt auch als unterer Federendabschnitt bezeichnet werden. Der untere Federendabschnitt ist mittels des zugehörigen zweiten Federanschlussteils mit der Gegenmasse gekoppelt. Insofern ist also die Gegenmasse an den Aufhängungseinheiten der Aufhängungseinrichtung aufgehängt. Da die Aufhängungseinheiten an der Maschinenbasis angebracht sind, lässt sich mit anderen Worten sagen, dass die Gegenmasse - mittelbar - an der Maschinenbasis aufgehängt ist. Die Aufhängung der Gegenmasse erfolgt mittels der Federn der zweiten Federgruppe, so dass die Gegenmasse relativ zu der Maschinenbasis beweglich und schwingfähig ist. Vorzugsweise handelt es sich bei den Federn der zweiten Federgruppe um Zylinderdruckfedern. Dies bewirkt eine weitgehende Entkopplung der Maschinenbasis von im Betrieb auftretenden Schwingungen der Gegenmasse. In diesem Sinne, also schwingungstechnisch, kann die Maschinenbasis oder eine Kombination der Maschinenbasis mit einem zu ihrer Aufstellung dienenden Untergrund daher auch als Fundament bezeichnet werden. Bei der Maschinenbasis kann es sich zum Beispiel um eine Basisplatte oder um ein Maschinengestell handeln. Andererseits ist der Schwinger mittels der Federn der ersten Federgruppe so mit der Gegenmasse verbunden, dass der Schwinger relativ zu der Gegenmasse beweglich und schwingfähig ist.

Sofern vorangehend oder im Folgenden von einer Verbindung oder Kopplung gewisser Komponenten die Rede ist, kann es sich dabei um eine direkte oder indirekte Verbindung bzw. um eine direkte oder indirekte Kopplung handeln. Bei einer indirekten Verbindung bzw. Kopplung besteht die Möglichkeit, dass die Verbindung bzw. Kopplung mittelbar, also mittels weiterer Elemente erfolgt, die insbesondere zwischen den mittelbar verbundenen bzw. mittelbar gekoppelten Komponenten angeordnet sein können.

Nachfolgend werden exemplarisch bevorzugte Möglichkeiten zur zweckmäßigen und vorteilhaften Weiterbildung vorgestellt:

Bei einem Linear-Vibrationsförderer, wie auch bei einem Rund-Vibrationsförderer lassen sich der Aufbau und die Montage dadurch vereinfachen, dass sich ein jeweiliger Träger in einem Trägerlängenteilabschnitt, der sich entlang der gesamten Länge der mit ihm verbundenen Feder erstreckt, in einer zu der Längsrichtung oder der Umfangsrichtung des Vibrationsförderers quer orientierten Bezugsebene in dem gesamten Trägerlängenteilabschnitt oder in einem überwiegenden Anteil des Trägerlängenteilabschnittes seitlich des Schwingers und seitlich der Gegenmasse erstreckt. Es besteht die Möglichkeit, dass die Träger an ihrem zweiten Trägerendabschnitt als Befestigungsmittel je eine oder mehrere Durchgangsbohrungen aufweisen, mittels denen die Träger direkt oder indirekt an der Maschinenbasis befestigt sind. Bei einer bevorzugten Ausgestaltung
ist vorgesehen, dass sich betreffend eine jeweilige Aufhängungseinheit ihre Feder entlang, vorzugsweise parallel zu, einem Trägerlängenteilabschnitt ihres Trägers erstreckt. Die Länge des Trägerlängenteilabschnitts kann der Länge der Feder in ihrem eingebauten Zustand entsprechen. Bei den Federn der Aufhängungseinheiten kann es sich vorzugsweise um Zylinderfedern, weiter bevorzugt um Zylinderdruckfedern, die im Vergleich zu Zylinderzugfedern eine höhere Steifigkeit haben, aufweisen. Bevorzugt ist, dass an jeder Aufhängungseinheit mittels des ersten Federanschlussteils eine erste Umfangs-Klemmhalterung gebildet ist, in welcher der erste Federendabschnitt eingespannt ist, und mittels des zweiten Federanschlussteils eine zweite Umfangs-Klemmhalterung gebildet ist, in welcher der zweite Federendabschnitt eingespannt ist.

Insbesondere bei einer Ausgestaltung des Vibrationsförderers als Linear-Vibrationsförderer wird als zweckmäßig angesehen, dass die Aufhängungseinrichtung zwei Aufhängungsbaugruppen umfasst, wobei jede Aufhängungsbaugruppe eine erste Aufhängungseinheit und eine zweite Aufhängungseinheit aufweist, wobei insbesondere vorgesehen ist, dass an einer jeweiligen Aufhängungsbaugruppe an der ersten Aufhängungseinheit und an der zweiten Aufhängungseinheit an einem mit dem jeweiligen ersten Trägerendabschnitt verbundenen Halteteil oder an dem jeweiligen ersten Trägerendabschnitt eine Gewindedurchgangsbohrung ausgebildet ist, wobei durch jede dieser Gewindedurchgangsbohrungen je ein mit Gewinde versehenes Einstellelement, insbesondere ein Schraube, hindurchgeschraubt ist und wobei sich eine jeweilige geometrische Längsachse der Einstellelemente in ihrer geometrischen Verlängerung durch den Schwinger erstreckt. Bevorzugt ist, dass sich ein freies Längsende des jeweiligen Einstellelements jeweils in einem mittels des Gewindes einstellbaren axialen Abstand von dem Schwinger befindet. Dies ermöglicht eine Einstellung bzw. Begrenzung des seitlichen Schwingungsweges.

Als zweckmäßig wird angesehen, dass jede Aufhängungsbaugruppe ein Verbindungsteil aufweist, wobei betreffend eine jeweilige Aufhängungsbaugruppe der zweite Trägerendabschnitt des Trägers der ersten Aufhängungseinheit mit dem Verbindungsteil an einer ersten Seite des Verbindungsteils verbunden ist und der zweite Trägerendabschnitt des Trägers der zweiten Aufhängungseinheit mit dem Verbindungsteil an einer der ersten Seite entgegengesetzten, zweiten Seite des Verbindungsteils verbunden ist, wobei insbesondere vorgesehen ist, dass das Verbindungsteil Durchgangsbohrungen aufweist, die zu Gewindebohrungen in der Maschinenbasis fluchten, wobei zur Befestigung des Verbindungsteils an der Maschinenbasis durch jede Durchgangsbohrung je eine Schraube in eine Gewindebohrung eingeschraubt ist. Dies trägt zur Stabilität des Aufbaues bei.

Bevorzugt ist, dass betreffend jede Aufhängungseinheit der zweite Trägerendabschnitt des Trägers ein zu der geometrischen Längsachse der Feder quer verlaufendes Trägersegment aufweist, dass zwischen dem Trägersegment und dem zweiten Federanschlussteil ein Spalt gebildet ist und dass sich durch das Trägersegment eine quer zu dem Spalt gerichtete Gewindedurchgangsbohrung erstreckt, durch die ein mit Gewinde versehenes Justierelement, insbesondere eine Schraube, hindurchgeschraubt ist, so dass ein freies Ende des Justierelements in den Spalt hineinragt. Dies ermöglicht eine Ausrichtung bzw. Justage der Aufhängungseinrichtung.

Bei einem bevorzugten Ausführungsbeispiel ist vorgesehen, dass jede Aufhängungsbaugruppe eine Stützplatte umfasst und dass betreffend eine jeweilige Aufhängungsbaugruppe die Feder der ersten Aufhängungseinheit an ihrem zweiten Federendabschnitt mittels des zweiten Federanschlussteils der ersten Aufhängungseinheit an die Stützplatte an einer ersten Seite der Stützplatte angeschlossen ist und die Feder der zweiten Aufhängungseinheit an ihrem zweiten Federendabschnitt mittels des zweiten Federanschlussteils der zweiten Aufhängungseinheit an die Stützplatte an einer zu der ersten Seite entgegengesetzten, zweiten Seite der Stützplatte angeschlossen ist, und dass die Gegenmasse auf den Stützplatten der Aufhängungsbaugruppen abgestützt ist. Bevorzugt ist, dass in einer zu den geometrischen Längsachsen der Federn parallelen Richtung ein Abstand zwischen dem Verbindungsteil und der Stützplatte weniger als 10 mm, insbesondere 5 mm oder etwa 5 mm beträgt. Auch in diesem Zusammenhang schließt der Begriff "etwa" vorzugsweise Abweichungen von bis zu 1 mm ein.

In einem weiteren bevorzugten Ausführungsbeispiel ist vorgesehen, dass eine jeweilige Aufhängungsbaugruppe eine erste Befestigungseinrichtung und eine zweite Befestigungseinrichtung umfasst, dass betreffend eine jeweilige Aufhängungsbaugruppe die Feder der ersten Aufhängungseinheit an ihrem zweiten Federendabschnitt mittels des zweiten Federanschlussteils der ersten Aufhängungseinheit an die erste Befestigungseinrichtung angeschlossen ist und die Feder der zweiten Aufhängungseinheit an ihrem zweiten Federendabschnitt mittels des zweiten Federanschlussteils der zweiten Aufhängungseinheit an die zweite Befestigungseinrichtung angeschlossen ist, und dass die erste Befestigungseinrichtung an der Gegenmasse an einer ersten Seite der Gegenmasse angebracht, insbesondere angeschraubt, ist und die zweite Befestigungseinrichtung an der Gegenmasse an einer der ersten Seite gegenüber liegenden zweiten Seite der Gegenmasse angebracht, insbesondere angeschraubt, ist.

Bevorzugt ist, dass der Vibrationsantrieb an die Erzeugung einer Schwingungsbewegungsform des Schwingers angepasst ist, durch die auf dem Schwinger befindliches Fördergutteile zu Mikrowürfen, insbesondere zu parabelformartigen Mikrowürfen, angeregt werden. Dies ist vorteilhaft für die Vibrationsförderung (als den Vibrationstransport) von Fördergutteilen, die sich aufgrund ihres geringen Gewichts zu einer Wurfbewegung anregen lassen, bei der es jeweils zu einem kurzen Kontaktverlust mit einer auf dem Schwinger montierten Förderbahn des Vibrationsantriebs kommt. Bei den Fördergutteilen kann es sich zum Beispiel um Befestigungselemente, wie bspw. Schrauben oder dergleichen, oder um sonstige Kleinteile handeln. Bevorzugt ist außerdem, dass der Vibrationsförderer eine Führungsfläche, insbesondere zumindest eine Fördergutbahn, für Fördergutteile aufweist, die an dem Schwinger befestigt ist und die sich parallel zu einer Aufstellebene des Vibrationsförderers, insbesondere horizontal, erstreckt, wobei insbesondere vorgesehen ist, dass an dem Schwinger Mittel zum Sortieren von Fördergutteilen angebracht sind.

### Kurze Beschreibung der Zeichnungen

Die Aspekte der vorliegenden Erfindung werden nachfolgend mit Bezug auf die Figuren anhand von bevorzugten Ausführungsbeispielen beschrieben. Darin zeigt im Einzelnen:
- Fig. 1: perspektivisch ein erfindungsgemäßes Aufhängungsset gemäß einem ersten bevorzugten Ausführungsbeispiel;
- Fig. 2: perspektivisch einen erfindungsgemäßen Vibrationsförderer gemäß einem ersten bevorzugten Ausführungsbeispiel;
- Fig. 3: eine Seitenansicht in Blickrichtung III gemäß Fig. 2;
- Fig. 4: eine Seitenansicht gemäß Blickrichtung IV in Fig. 2;
- Fig. 5: eine Schnittansicht entlang Schnittebene V-V in Fig. 4, demgegenüber in Vergrößerung;
- Fig. 6: eine Schnittansicht entlang Schnittebene VI-VI von Fig. 4, demgegenüber in Vergrößerung und teilweise aufgebrochen;
- Fig. 7: perspektivisch ein erfindungsgemäßes Aufhängungsset gemäß einem zweiten bevorzugten Ausführungsbeispiel;
- Fig. 8: perspektivisch einen erfindungsgemäßen Vibrationsförderer gemäß einem zweiten bevorzugten Ausführungsbeispiel;
- Fig. 9: eine Seitenansicht in Blickrichtung IX gemäß Fig. 8, demgegenüber in Vergrößerung;
- Fig. 10: eine Seitenansicht in Blickrichtung X von Fig. 8, demgegenüber in Vergrößerung;
- Fig. 11: eine Draufsicht in Blickrichtung XI gemäß Fig. 8, demgegenüber in Vergrößerung;
- Fig. 12: eine Schnittansicht entlang Schnittebene XII - XII in Fig. 11, demgegenüber in Vergrößerung;
- Fig. 13: perspektivisch ein erfindungsgemäßes Aufhängungsset gemäß einem dritten bevorzugten Ausführungsbeispiel;
- Fig. 14: perspektivisch einen erfindungsgemäßen Vibrationsförderer gemäß einem dritten bevorzugten Ausführungsbeispiel; und
- Fig. 15: perspektivisch einen erfindungsgemäßen Vibrationsförderer gemäß einem vierten bevorzugten Ausführungsbeispiel.

### Beschreibung der Ausführungsformen

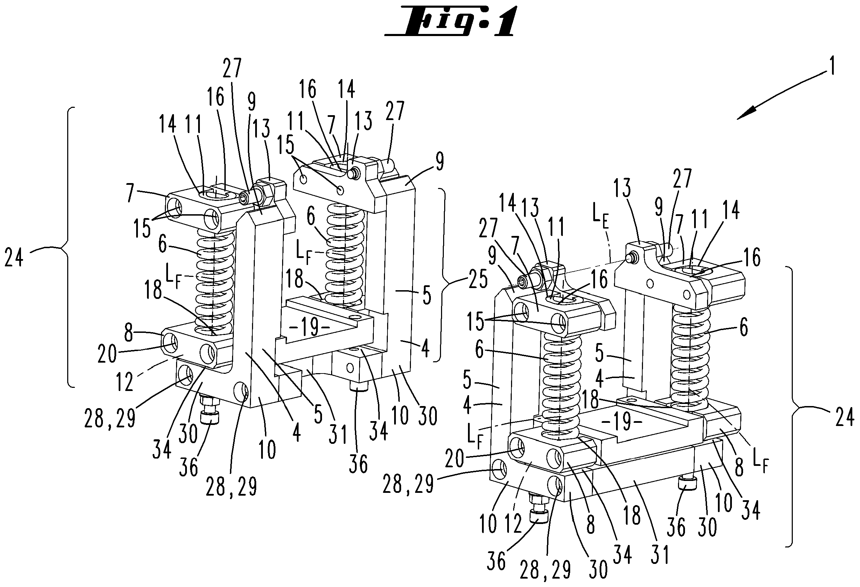

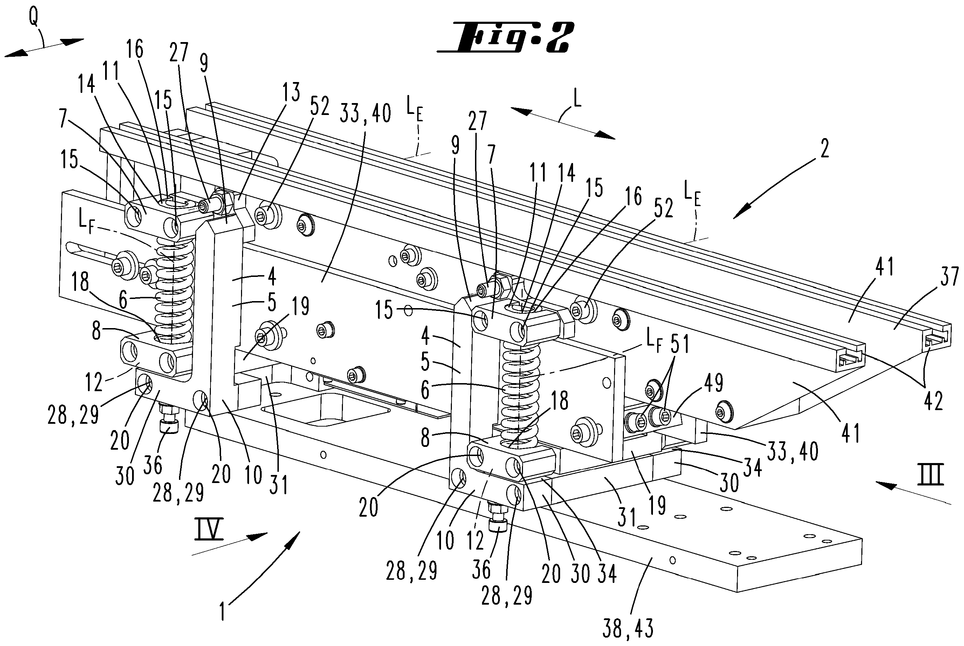

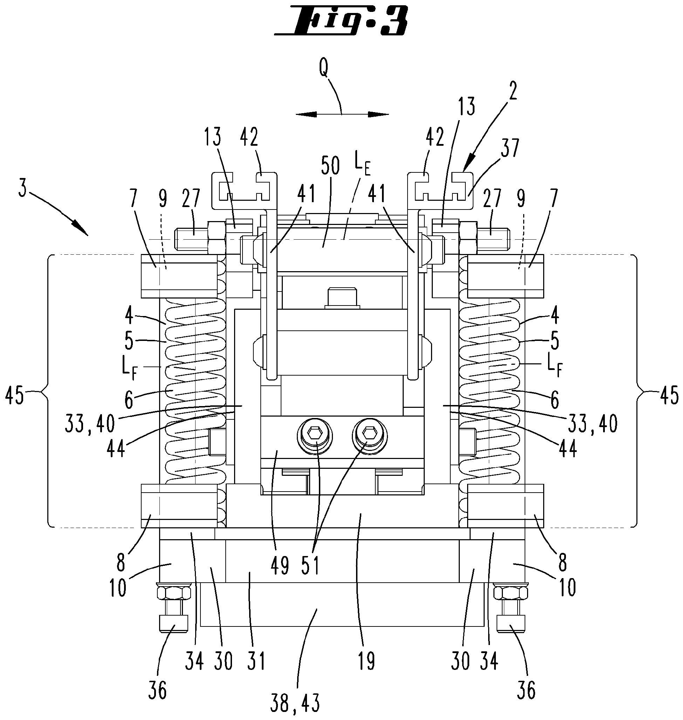

Mit Bezug auf Fig. 1 wird zunächst ein erfindungsgemäßes Aufhängungsset 1 gemäß einem ersten bevorzugten Ausführungsbeispiel vorgestellt. Dessen in Fig. 1 gezeigten Komponenten lassen sich, wie die Figuren 2-7 exemplarisch zeigen, in den Aufbau eines erfindungsgemäßen Vibrationsförderers 2 integrieren, so dass sie dort (wie noch nachfolgend beschrieben) eine schwingfähige Aufhängung einer sog. Gegenmasse ermöglichen.

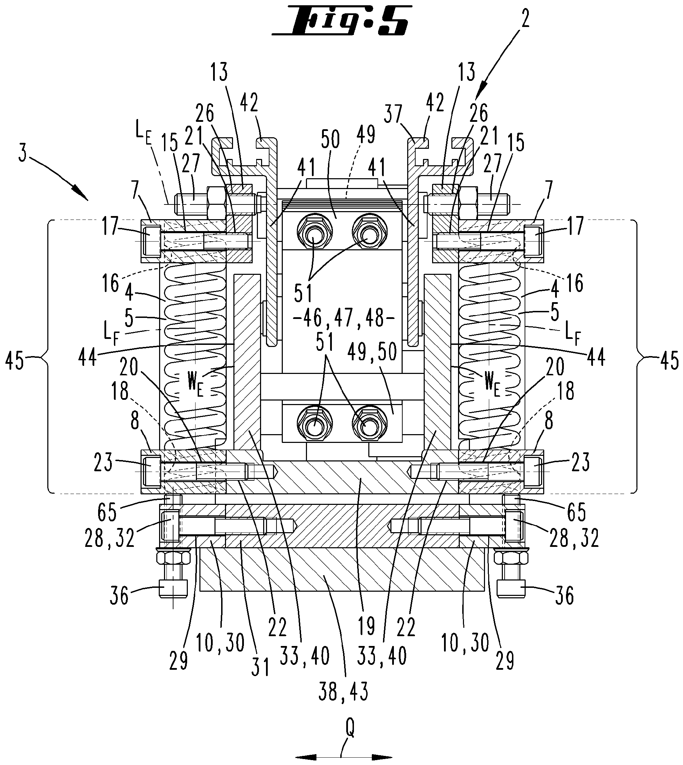

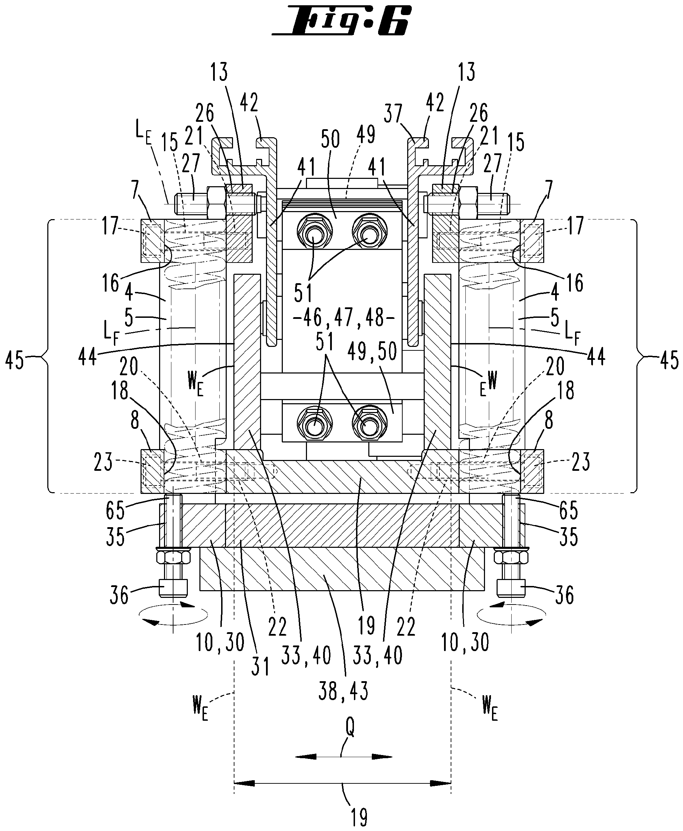

Mit Bezug auf Fig. 1 handelt es sich bei dem Aufhängungsset 1 somit um ein Aufhängungsset für einen Vibrationsförderer 2. Dieses umfasst in dem Beispiel vier Aufhängungseinheiten 4, von denen jede einen Träger 5, eine Feder 6, ein erstes Federanschlussteil 7 und ein zweites Federanschlussteil 8 aufweist. In Blickrichtung von Fig. 1 besitzt jeder Träger 5 einen an sein oberes Längsende angrenzenden ersten Trägerendabschnitt 9 und einen an sein unteres Längsende angrenzenden zweiten Trägerendabschnitt 10. Ebenfalls in Blickrichtung von Fig. 1 besitzt jede Feder 6 einen von ihrem oberen Federende ausgehenden ersten Federendabschnitt 11 und einen von ihrem unteren Längsende ausgehenden zweiten Federendabschnitt 12. An jeder der vier Aufhängungseinheiten 4 ist der jeweilige erste Trägerendabschnitt 9 mittels des ersten Federanschlussteils 7 mit dem ersten Federendabschnitt 11 gekoppelt. Dazu ist an jedem ersten Trägerendabschnitt 9 je ein Halteteil 13 auf nicht näher gezeigte Weise befestigt (z.B. angeschraubt), das sich quer zu einer Längsrichtung L_{F} der Feder 6 erstreckt. In das erste Federanschlussteil 7 ist eine Durchgangsöffnung 14 eingebracht, deren Hohlquerschnitt auf einer zu dem Halteteil 13 weisenden Seite unberandet ist und der auf der von dem Halteteil 13 abgewandten Seite halbkreisförmig berandet ist, wobei der Kreisdurchmesser der halbkreisförmigen Berandung etwa dem Außendurchmesser der Feder 6 entspricht. Die Abmessung des Hohlquerschnitts in zu dem Halbkreis quer verlaufender Richtung ist etwas geringer als der Außendurchmesser der Feder 6. Der jeweilige erste Federendabschnitt 11 ist in die Durchgangsöffnung 14 eingesteckt. Das erste Federanschlussteil 7 weist quer zu der Längsrichtung L_{F} orientierte Durchgangsbohrungen 15 auf, durch die jeweils eine Schraube in eine dahinter liegende, in Fig. 1 nicht mit dargestellte Gewindebohrung 21 in dem Halteteil 13 eingeschraubt ist. Da der Querschnitt der Durchgangsöffnung 14 an der dem Halteteil 13 zuweisenden Seite im Vergleich zu dem Außendurchmesser der Feder 6 abgeflacht ist, bildet das erste Federanschlussteil 7 eine Spannplatte für die Feder 6. Wenn die durch die Durchgangsbohrung 15 gesteckten Schrauben 17 (in Fig. 1 nicht gezeigt, siehe aber Fig. 5) festgespannt sind, wird eine erste Umfangs-Klemmhalterung 16 zur Kopplung des ersten Federendabschnittes 11 gebildet. Vergleichbar ist an jeder Aufhängungseinheit 4 mittels des zweiten Federanschlussteils 8 eine zweite Umfangs-Klemmhalterung 18 zur Kopplung mit dem zweiten Federendabschnitt 12 gebildet. Dazu entsprechen die zweiten Federanschlussteile 8 baulich den ersten Federanschlussteilen 7. Durch jede zweite Kopplungseinrichtung 8 erstrecken sich quer zu der Längsrichtung L_{F} der Feder 6 zwei Durchgangsbohrungen 20. Zwischen je zwei benachbarten zweiten Federanschlussteilen 8 ist in dem Beispiel eine Stützplatte 19 angeordnet. In dieser erstrecken sich ausgehend von den Schmalseiten je zwei Gewindebohrungen 22 (siehe z.B. Fig. 6). Durch jede Durchgangsbohrung 20 ist eine Schraube 23 (siehe ebenfalls Fig. 6) hindurch gesteckt und in die zugeordnete Gewindebohrung 22 eingeschraubt. Werden die Schrauben 23 festgespannt, resultiert die zweite Umfangs-Klemmhalterung 18. In dem in Fig. 1 gezeigten Ruhezustand erstreckt sich an jeder Aufhängungseinheit 4 ihre Feder 6 parallel zu einem Längsabschnitt 25 des Trägers 5, wobei es sich in dem Beispiel bei den Federn 6 um Zylinderdruckfedern handelt.

Bei dem in Fig. 1 gezeigten Beispiel weist das Aufhängungsset 1 zwei Aufhängungsbaugruppen 24 auf, von denen jede Aufhängungsbaugruppe 24 zwei Aufhängungseinheiten 4, nämlich eine in Blickrichtung von Fig. jeweils vorne liegende erste Aufhängungseinheit 4 und eine in Blickrichtung von Fig. 1 jeweils dahinter liegende sog. zweite Aufhängungseinheit 4, aufweist. Innerhalb jeder Aufhängungsbaugruppe 24 ist in dem Beispiel an jeder der beiden Aufhängungseinheiten 4 an dem mit dem ersten Trägerendabschnitt 9 verbundenen Halteteil 13 eine Gewindedurchgangsbohrung 26 (vgl. Fig. 6) ausgebildet, wobei durch jede Gewindedurchgangsbohrung 26 je ein mit Gewinde versehenes Einstellelement 27 hindurchgeschraubt ist, so dass sich eine jeweilige geometrische Längsachse L_{E} senkrecht zu einer zwischen den beiden Aufhängungseinheiten 4 einer Aufhängungsbaugruppe 24 hindurchführenden geometrischen Mittelebene (in Fig. 1 nicht mit dargestellt) erstreckt.

An jeder der vier Aufhängungseinheiten 4 ist vorgesehen, dass der Träger 5 an seinem zweiten Trägerendabschnitt 10 Befestigungsmittel 28 aufweist, bei denen es sich um zwei zueinander parallele, senkrecht zu der Längsrichtung L_{F} der Feder 6 verlaufende Durchgangsbohrungen 29 handelt. Diese verlaufen quer durch ein sich ebenfalls senkrecht zu der Längsrichtung L_{F} erstreckendes Trägersegment 30, welches Bestandteil des zweiten Trägerendabschnittes 10 ist. Jede Aufhängungsbaugruppe 34 weist ein Verbindungsteil 31 auf, welches zwischen den beiden Trägersegmenten 30 einer betrachteten Aufhängungsbaugruppe 24 angeordnet ist. Diese Anordnung ist auch in Fig. 5 gezeigt. Dementsprechend sind innerhalb einer Aufhängungsbaugruppe 24 die beiden Trägersegmente 30, d.h. die beiden zweiten Trägerendabschnitte 10, an sich gegenüberliegenden Seiten des Verbindungsteils 31 mit diesem verbunden. In dem gewählten Beispiel sind die Trägersegmente 30 mittels Schrauben 32 an dem Verbindungsteil 31 festgeschraubt.

Aus den vorangehenden Erläuterungen wird deutlich, dass bei dem in Fig. 1 gezeigten Ausführungsbeispiel eines Aufhängungssets 1 die insgesamt vier Aufhängungseinheiten 4, insoweit sie zu der gleichen Aufhängungsbaugruppe 24 gehören, also paarweise, nur mittels einer Verbindung zwischen ihren jeweiligen Trägerendabschnitten 10 und mittels einer weiteren Verbindung zwischen ihren jeweiligen zweiten Federanschlussteilen 8 miteinander verbunden sind. Oberhalb der beiden zweiten Federanschlussteile 8 sind die beiden Aufhängungseinrichtungen 4, die zu einer gemeinsamen Aufhängungsbaugruppe 24 des Aufhängungssets 1 gehören, verbindungsfrei. Wie Fig. 2 veranschaulicht, ermöglichen die beschriebenen Komponenten des Aufhängungssets 1 in ihrem montierten Zustand, d.h. als Bestandteile des Vibrationsförderers 2, eine Gegenmasse 33 schwingfähig aufzuhängen, wobei sich die jeweiligen Träger 5 jeweils seitlich außerhalb (d.h. nicht wie im Stand der Technik innerhalb) der Gegenmasse erstrecken.

In dem in Fig. 1 gewählten Beispiel ist zwischen jedem Trägersegment 30 und dem darüber angeordneten zweiten Federanschlussteil 8 jeweils ein Spalt 34 gebildet (siehe auch entsprechend in der Schnittansicht von Fig. 6). In dem Beispiel ist durch ein jeweiliges Trägersegment 30 eine quer zu dem Spalt 34 gerichtete Gewindedurchgangsbohrung 35 ausgebildet, durch die ein mit Gewinde versehenes Justierelement 36 (in dem Beispiel eine Schraube) hindurchgeschraubt ist, so dass ein freies Ende 65 des Justierelementes 36 in den Spalt 34 hineinragt. In dem Beispiel beträgt die Spaltweite des Spaltes 34 5 mm.

Mit Bezug auf die Figuren 2 bis 6 wird ein erfindungsgemäßer Vibrationsförderer 2 gemäß einem ersten bevorzugten Ausführungsbeispiel beschrieben. Wie schon angesprochen wurde, enthält dieser Vibrationsförderer 2 sämtliche Bestandteile des in Fig. 1 gezeigten Aufhängungssets 1 in montiertem Zustand. Das in Fig. 1 gezeigte Aufhängungsset 1 wurde zum Aufbau des in den Figuren 2 bis 6 gezeigten Vibrationsförderers 2 verwendet, so dass die Bestandteile des Aufhängungssets 1 nun Bestandteile des Vibrationsförderers 2 sind, die gemeinsam eine Aufhängungseinrichtung 3 bilden. Für die Beschreibung des Vibrationsförderers 2 wird daher zur Vermeidung von Wiederholungen auch auf die vorangehende Beschreibung dieser Bestandteile Bezug genommen.

Der Vibrationsförderer 2 weist einen Schwinger 37, eine Gegenmasse 33, eine Maschinenbasis 38, einen Vibrationsantrieb sowie die aus den Bestandteilen des in Fig. 1 gezeigten Aufhängungssets gebildete Aufhängungseinrichtung 3 auf. Der Vibrationsförderer 2 ist in dem Beispiel als Linear-Vibrationsförderer ausgestaltet, der sich entlang einer Längsrichtung L erstreckt; in dem Beispiel verläuft entsprechend auch die Förderrichtung F entlang der Längsrichtung L. Die Gegenmasse 33 umfasst zwei in der Längsrichtung L orientierte, quer voneinander beabstandete und miteinander verbundene Wangen 40. Der Schwinger 37 umfasst zwei in Längsrichtung L orientierte, ebenfalls quer voneinander beabstandete und miteinander verbundene Längsträger 41. An diesen erstreckt sich oberseitig entlang der Längsrichtung L je ein nach oben hin offenes Längsprofil 42, das zur Befestigung von Aufbauten, wie z.B. von Förderschienen, Förder- und Sortierstrecken oder dergleichen dienen kann. Die beiden Längsträger 41 liegen unter bereichsweiser Überlappung zwischen den Wangen 40 (vgl. Fig. 5). Der Schwinger 37 ist mittels einer ersten Federgruppe mit der Gegenmasse 33 verbunden und dabei mittels der ersten Federgruppe relativ zu der Gegenmasse 33 gefedert, also beweglich gehalten. Dabei ist der Schwinger 37 mittels des zwischen den beiden Wangen 40 und zwischen den beiden Längsträgern 41 angeordneten Vibrationsantriebs relativ zu der Gegenmasse 33 zu Schwingungen anregbar bzw. antreibbar. Der Vibrationsantrieb umfasst in dem Beispiel einen Magnetantrieb 39 mit einem an der Gegenmasse 33 befestigten Elektromagnet 63 und einen an dem Schwinger 37 montierten Anker 64, der durch einen sich im Betrieb ändernden Magnetspalt von dem Elektromagnet beabstandet ist. Wird an den Magnetantrieb 39 eine Wechselspannung angelegt, regt er den Schwinger 37 zu Schwingungen an. Die Gegenmasse 33 ist mittels der Aufhängungseinrichtung 3 mit der Maschinenbasis 38 verbunden und dabei zufolge der erzielten Aufhängung an den Federn 6 relativ zu der Maschinenbasis 38 schwingfähig gehalten. Aus der vorangehenden Beschreibung ergibt sich, dass die Aufhängungseinrichtung 3 in dem Beispiel vier Aufhängungseinheiten 4 umfasst, von denen jede einen Träger 5, eine Feder 6, ein erstes Federanschlussteil 7 und ein zweites Federanschlussteil 8 aufweist. Dabei ist das Federanschlussteil 7 oberhalb des Federanschlussteils 8 angeordnet. Jeder Träger 5 weist einen ersten Trägerendabschnitt 9 und einen zweiten Trägerendabschnitt 10 auf, wobei sich der Trägerendabschnitt 9 ausgehend von einem oberen Längsende des Trägers 5 und der zweite Trägerendabschnitt 10 ausgehend von einem unteren Längsende des Trägers 5 erstreckt. Jede Feder 6 besitzt einen ersten Federendabschnitt 11, der sich ausgehend von einem oberen Längsende der Feder 6 erstreckt, und einen zweiten Federendabschnitt 12, der sich ausgehend von einem unteren Längsende der Feder 6 erstreckt. Die Federn 6 der vier Aufhängungseinheiten 4 bilden eine zweite Federgruppe, mittels der die Gegenmasse 33 federnd an der Aufhängungseinrichtung 3 aufgehängt ist. An einer jeweiligen Aufhängungseinheit 4 ist der erste Trägerendabschnitt 9 mittels des ersten Federanschlussteils 7 mit dem ersten Federendabschnitt 11 gekoppelt. Der zweite Trägerendabschnitt 10 ist mit der Maschinenbasis 38, bei der es sich in dem Beispiel um eine Basisplatte 43 handelt, verbunden. Hierzu sind die Trägersegmente 30 mittels der Schrauben 32 an dem Verbindungsteil 31 angeschraubt (siehe Fig. 5), während das Verbindungsteil 31 auf in den Figuren nicht gezeigte Weise (z.B. ebenfalls mittels Schrauben) mit der Basisplatte 43 verbunden ist. An jeder der vier Aufhängungseinheiten 4 ist das zweite Federanschlussteil 8 mit der Gegenmasse 33, wie noch beschrieben wird, verbunden. Wie z. B. die Figuren 2, 3 und 5, 6 zeigen, ist jeweils der zweite Trägerendabschnitt 10 eines jeden der vier Träger 5 in Bezug auf jeweilige Bezugsebenen, die quer zu der Längsrichtung L des Vibrationsförderers 2 orientiert sind, außerhalb der Gegenmasse 33 und außerhalb des Schwingers 37 angeordnet. Die Zeichenebene bspw. von Figur 5 entspricht einer Bezugsebene, die durch den darin links gezeigten zweiten Trägerendabschnitt 10 führt und die quer zu der Längsrichtung L des Vibrationsförderers 2 orientiert ist. Zugleich entspricht die Zeichenebene von Figur 5 auch einer Bezugsebene, die durch den darin rechts gezeigten zweiten Trägerendabschnitt 10 führt und die quer zu der Längsrichtung L des Vibrationsförderers 2 orientiert ist. In dem Beispiel (d. h. nicht notwendig) ist für die beiden zweiten Trägerendabschnitte 10 die betrachtete jeweilige Bezugsebene die gleiche Bezugsebene. Ein jeweiliger zweiter Trägerendabschnitt 10 ist in der jeweiligen durch ihn führenden, zu der Längsrichtung L quer orientierten Bezugsebene außerhalb des Schwingers 37 und außerhalb der Gegenmasse 33 angeordnet. Entsprechend lässt sich auch für jeden der beiden weiteren, in Blickrichtung von Figur 2 rechts angeordneten zweiten Trägerendabschnitte 10 eine jeweilige Bezugsebene wählen, die durch den jeweils betrachteten zweiten Trägerendabschnitt 10 führt und die quer zu der Längsrichtung L orientiert ist. Auch die jeweiligen Bezugsebenen dieser beiden zweiten Trägerendabschnitte 10 können zufolge ihrer einander gegenüberliegenden Lage zueinander gleich gewählt werden. Aus dem Vorangehenden wird deutlich, dass es sich bei den Bezugsebenen um gedachte Ebenen für die Betrachtung handelt, so dass anstelle von Bezugsebenen auch von Betrachtungsebenen oder von Bezugs- oder Betrachtungsquerschnitten gesprochen werden kann. In Fig. 6 ist angedeutet, dass die jeweiligen Außenseiten 44 der Wangen 40 je eine Wangenebene W_{E} aufspannen, die sich über die Kontur der jeweiligen Wange 40 hinaus erstrecken. Dabei ist vorgesehen, dass jeder der beiden zweiten Trägerendabschnitte 10 seitlich außerhalb des von den beiden Wangenebenen W_{E} berandeten Zwischenraumes angeordnet ist. In näherer Einzelheit erstreckt sich ein jeweiliger Träger 5 in einem Trägerlängenteilabschnitt 45, der sich entlang der gesamten Länge der zu ihm benachbarten Feder 6 erstreckt, in einer zu der Längsrichtung L des Vibrationsförderers 2 quer orientierten Bezugsebene (siehe z.B. die Zeichenebene von Fig. 6) durchgehend seitlich außerhalb des von den beiden Wangenebenen W_{E} berandeten Zwischenraums und insofern seitlich des Schwingers 37 und auch seitlich der Gegenmasse 33.

Die Aufhängungseinrichtung 3 umfasst zwei Aufhängungsbaugruppen 24, die voneinander in der Längsrichtung L des Vibrationsförderers 2 beabstandet angeordnet sind. Jede Aufhängungsbaugruppe 24 weist eine in Blickrichtung von Fig. 2 vorne liegende, sog. erste Aufhängungseinheit 4 und eine in Blickrichtung von Fig. 2 schräg dahinter liegende, sog. zweite Aufhängungseinheit 4 auf. An jeder Aufhängungseinheit 4 einer jeweiligen Aufhängungsbaugruppe 24 ist an dem dortigen sog. ersten Trägerendabschnitt 9 ein Halteteil 13 befestigt (siehe auch Fig. 1), durch das sich eine Gewindedurchgangsbohrung 26 erstreckt. Durch jede Gewindedurchgangsbohrung 26 ist ein Einstellelement 27, in dem Beispiel eine Schraube, hindurchgeschraubt. Die Längsenden von zwei Einstellelementen 27, die zu der gleichen Aufhängungsbaugruppe 24 gehören, zeigen von entgegengesetzten Richtungen auf den Schwinger 37. Mittels Verdrehung der beiden Einstellelemente 27 kann ein jeweiliger seitlicher Freiraum zu dem Schwinger 37 verändert werden und dadurch eine seitliche Schwingungsbegrenzung erfolgen.

Wie schon mit Bezug auf Fig. 1 beschrieben, weist jede Aufhängungsbaugruppe 24 ein Verbindungsteil 31 auf. Betreffend eine jeweilige Aufhängungsbaugruppe 24 ist der zweite Trägerendabschnitt 10 des Trägers 5 der ersten Aufhängungseinheit 4 mit dem Verbindungsteil 31 an einer ersten Seite des Verbindungsteils 31 verbunden, und der zweite Trägerendabschnitt 10 des Trägers 5 der zweiten Aufhängungseinheit 4 ist mit dem Verbindungsteil 31 an der entgegengesetzten Seite des Verbindungsteils 31 verbunden. An jeder Aufhängungseinheit 4 weist der zweite Trägerendabschnitt 10 ein quer zu der geometrischen Längsachse L_{F} quer verlaufendes Trägersegment 30 auf, so dass der Träger 5 ein im Wesentlichen L-förmiges Profil besitzt. Ein jeweiliges Trägersegment 30 ist von dem ihm benachbarten zweiten Federanschlussteil 8 durch einen Spalt 34 beabstandet. Dabei erstreckt sich durch das Trägersegment 30 in einer zu der Längsachse L_{F} der Feder 6 parallelen Richtung, also quer zu dem Spalt 34, eine Gewindedurchgangsbohrung 35, in die ein Justierelement 36 geschraubt ist, so dass sich ein freies Ende des Justierelements 36 in den Spalt 34 hinein erstreckt. Die insgesamt vier Justierelemente 36 können zur Feinjustage der Aufhängungseinrichtung 3, genauer gesagt der Spaltweite der jeweiligen Spalte 34 dienen. Dazu besteht zum Beispiel die Möglichkeit, dass an einer jeweiligen Aufhängungseinheit das Justierelement 36, bevor das zweite Federanschlussteil 8 an der Feder 6 festgeklemmt wird, so weit eingeschraubt wird, bis die Länge ihres über das Trägersegment 30 hinausstehenden Längsendes der gewünschten Spaltbreite entspricht, wobei sich das zweite Federanschlussteil 8 an seiner Unterseite auf dem Justierelement 36 abstützt. In dieser Position kann das zweite Federanschlussteil 8 an der Feder 6 festgeklemmt und das Justierelement 36 gelöst und ggf. gekontert werden. Vorzugsweise beträgt die Spaltbreite der Spalte 34 jeweils 5 mm.

Bei dem in den Figuren 2 bis 6 gezeigten Ausführungsbeispiel weist jede Aufhängungsbaugruppe 24 eine Stützplatte 19 auf. Innerhalb jeder Aufhängungsbaugruppe 24 ist die Feder 6 der ersten Aufhängungseinheit 4 an ihrem zweiten Federendabschnitt 12 mittels des zweiten Federanschlussteils 8 der ersten Aufhängungseinheit 4 an die Stützplatte 19 an einer ersten Seite der Stützplatte 19 angeschlossen, und die Feder 6 der zweiten Aufhängungseinheit 4 ist an ihrem zweiten Federendabschnitt 12 mittels des zweiten Federanschlussteils der zweiten Aufhängungseinheit 4 an die Stützplatte 19 an einer zu der ersten Seite entgegengesetzten Seite der Stützplatte 19 angeschlossen. Wie die Figuren zeigen, ist die Gegenmasse 8 auf einer jeweiligen Stützplatte 19 abgestützt. Zusätzlich sind die Wangen 40 an den Stützplatten 19 mittels in den Figuren nicht dargestellter Schrauben befestigt.

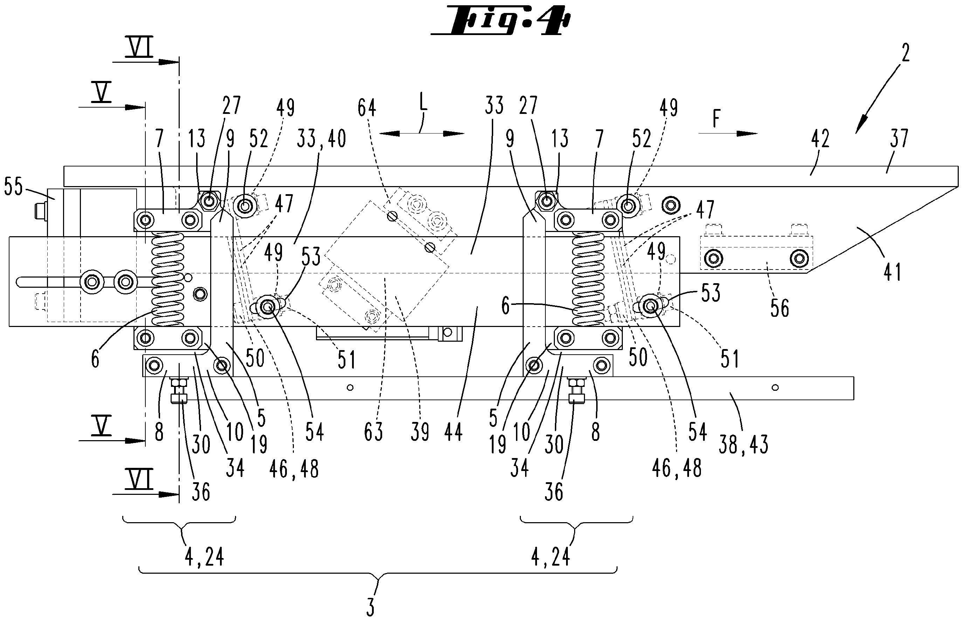

In dem gewählten Ausführungsbeispiel ist der Schwinger 37 mittels Federn 46 einer ersten Federgruppe mit der Gegenmasse 33 verbunden und dadurch relativ zu ihr schwingfähig gehalten. In dem Beispiel sind zwei Federn 46 vorhanden, bei denen es sich jeweils um ein Blattfederpaket 48, das aus mehreren Blattfedern 47 zusammengesetzt ist, handelt. Während die Träger 5 und die Federn 6 der zweiten Federgruppe seitlich außerhalb der Wangenebenen W_{E} angeordnet sind, erstrecken sich die Federn 46 im Inneren des Vibrationsförderers 2 zwischen den Wangen 40 der Gegenmasse 33 und zwischen den Längsträgern 41 des Schwingers 37, siehe auch die Figuren 5 und 6. Die in der in Fig. 4 gezeigten Einbaulage oberen Enden der Blattfedern 47 sind zwischen einem zur Zeichenebene von Fig. 4 senkrecht verlaufenden Distanzstück 49 und einem Gegenhalter 50 mittels dazu quer verlaufender Schrauben 51 eingespannt. Eine entsprechende Einspannung ist auch jeweils an den unteren Blattfederenden vorgesehen und mit entsprechenden Bezugszeichen versehen. Das obere Distanzstück 49 ist zwischen den Längsträgern 41 um seine Längsachse drehbar aufgenommen und kann in einer gewünschten Drehlage mittels durch Bohrungen der Längsträger 41 darin eingreifender Arretierschrauben 52 gesichert werden. Das untere Distanzstück 49 ist entlang von in die Wangen 40 eingebrachten, diese durchsetzenden Bogennuten 53 mit weiteren, dadurch eingreifenden Arretierschrauben 54 verschiebbar und in einer gewünschten Lage lösbar zu fixieren. Auf diese Weise kann der in Fig. 4 sichtbare Neigungswinkel der Blattfederpakete 48 verändert und dadurch das Wurf- bzw. Förderverhalten des Vibrationsförderers 2 verändert werden. Des Weiteren sind an der Gegenmasse 33 und an dem Schwinger 37 Kontergewichte 55, 56 in veränderbarer Lage und Gewichtsstärke lösbar montierbar, wodurch das Förderverhalten ebenfalls verändert werden kann. Eine bevorzugte Förderrichtung F ist in Fig. 4 durch einen Richtungspfeil angegeben.

Nachfolgend werden weitere bevorzugte Ausführungsbeispiele beschrieben. Soweit diese Ausführungsbeispiele Elemente und Merkmale aufweisen, die denen der vorangehenden Beispiele baulich oder zumindest funktionsmäßig entsprechen, werden dabei zur Übersicht, auch in den Figuren, die gleichen Bezugszeichen verwendet.

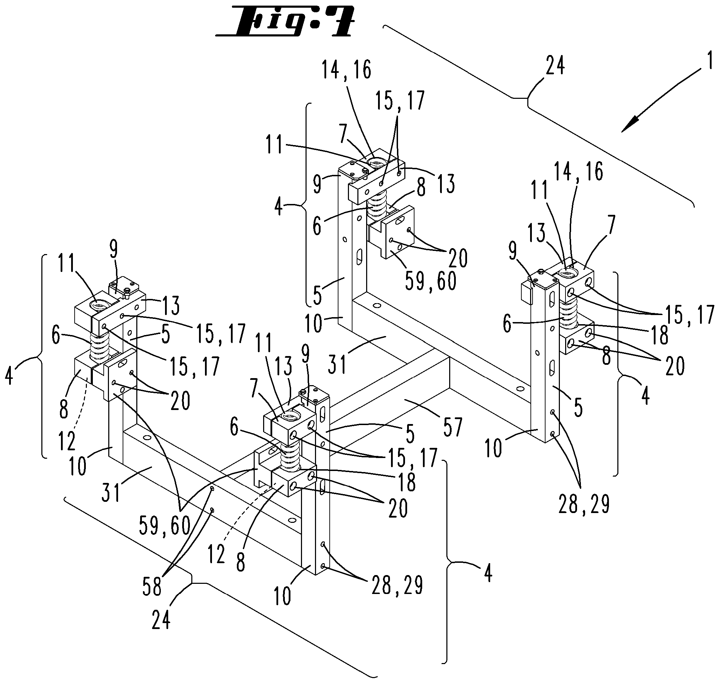

Fig. 7 zeigt perspektivisch ein zweites bevorzugtes Ausführungsbeispiel eines erfindungsgemäßen Aufhängungssets 1. Auch dieses umfasst vier Aufhängungseinheiten 4, wobei wieder jede einzelne Aufhängungseinheit 4 einen Träger 5, eine Feder 6, ein erstes Federanschlussteil 7 und ein zweites Federanschlussteil 8 aufweist. Fig. 7 zeigt, dass die Aufhängungseinheiten 4 paarweise mittels je eines Verbindungsteils 31 an den jeweiligen zweiten Trägerendabschnitten 10 miteinander verbunden werden können. Dazu können durch die Durchgangsbohrungen 29 Schrauben (in Fig. 7 nicht mit dargestellt) gesteckt und in dazu passende Gewindebohrungen (in Fig. 7 nicht gezeigt) in dem jeweiligen Verbindungsteil 31 geschraubt werden. Fig. 7 zeigt eine Anordnung, bei der sich die beiden Verbindungsteile 31 zueinander parallel und in Abstand voneinander erstrecken. Es besteht die Möglichkeit, die beiden Verbindungsteile 31 mittels eines Längsverbindungsteils 57 miteinander zu verbinden; dazu können Schrauben (in Fig. 7 nicht gezeigt) durch Durchgangsöffnungen 58 in dem betreffenden Verbindungsteil gesteckt und in dazu passende Gewindebohrungen (in Fig. 7 nicht gezeigt) des Längsverbindungsteils 57 eingeschraubt werden. Die Verbindungsteile 31 und das Längsverbindungsteil 57 gehören nicht notwendig zu dem Aufhängungsset 1. Sind diese Bestandteile nicht vorhanden, so sind die vier Aufhängungseinheiten 4 völlig voneinander getrennt. Sind die beiden Verbindungsteile 31 und das Längsverbindungsteil 57 andererseits vorhanden und wie zuvor beschrieben befestigt, sind die vier Aufhängungseinheiten 4 paarweise mittels je eines Verbindungsteils 31 nur an ihren jeweiligen zweiten Trägerendabschnitten 10 miteinander verbunden.

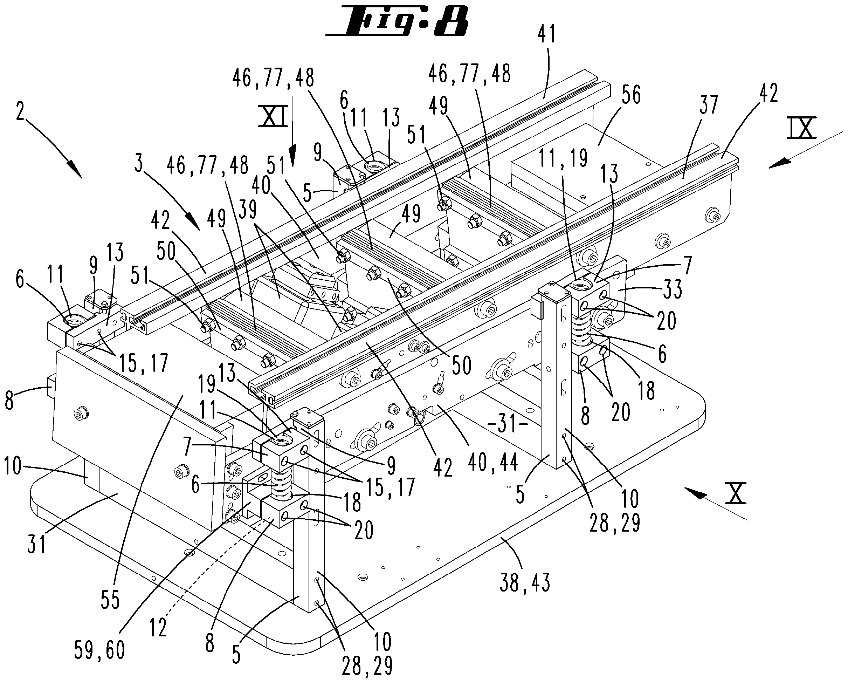

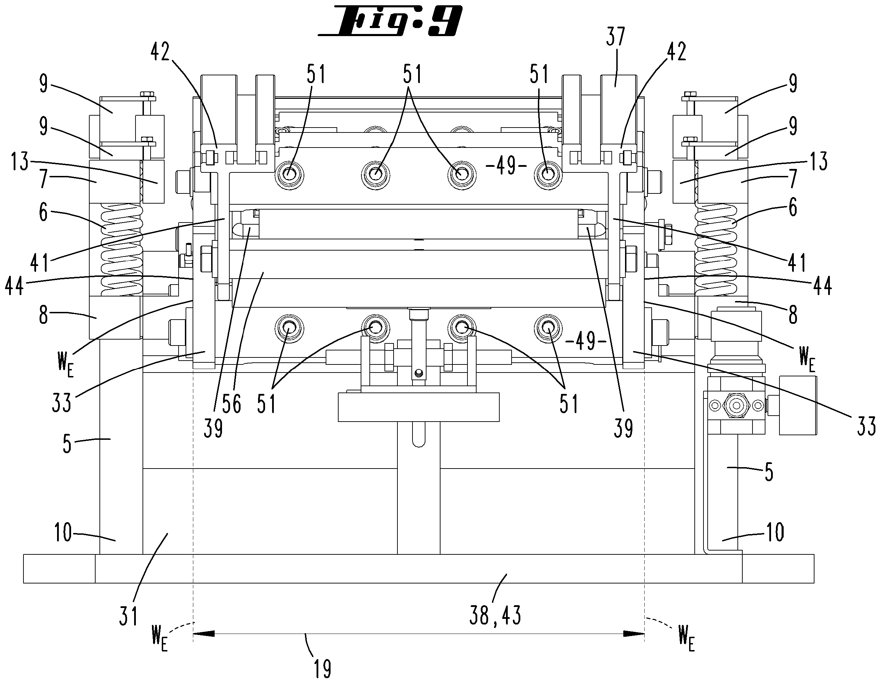

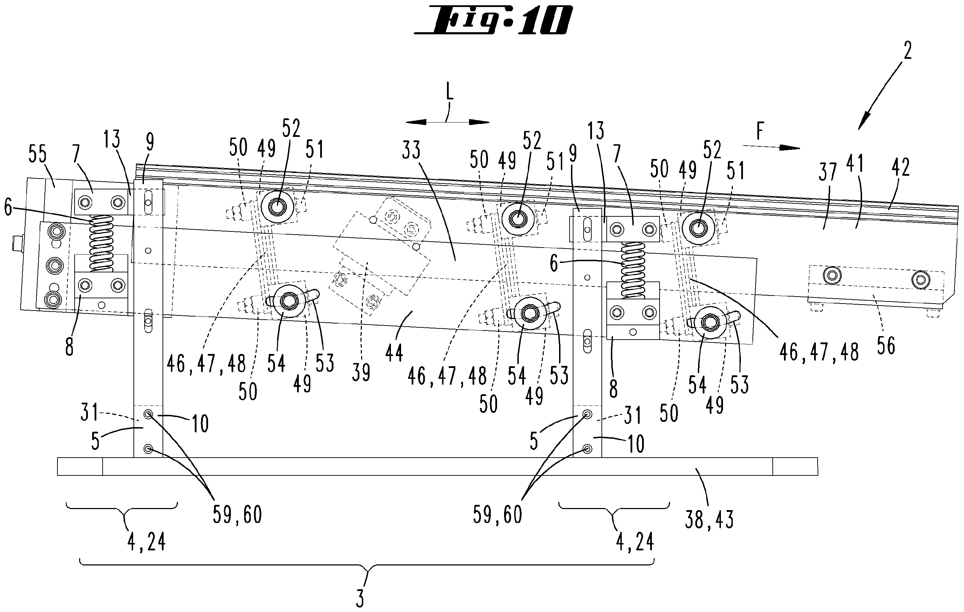

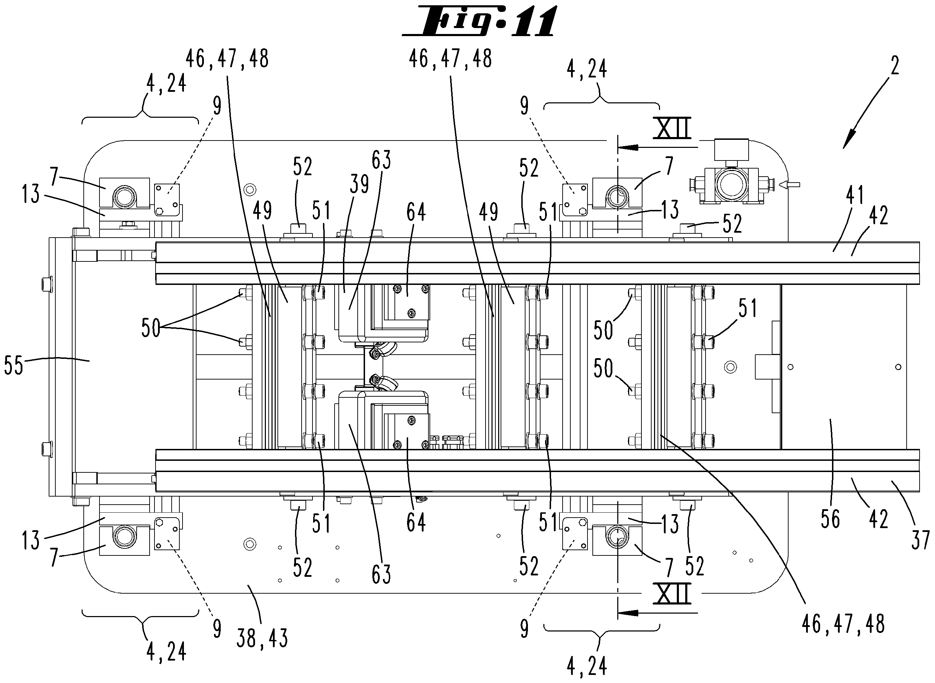

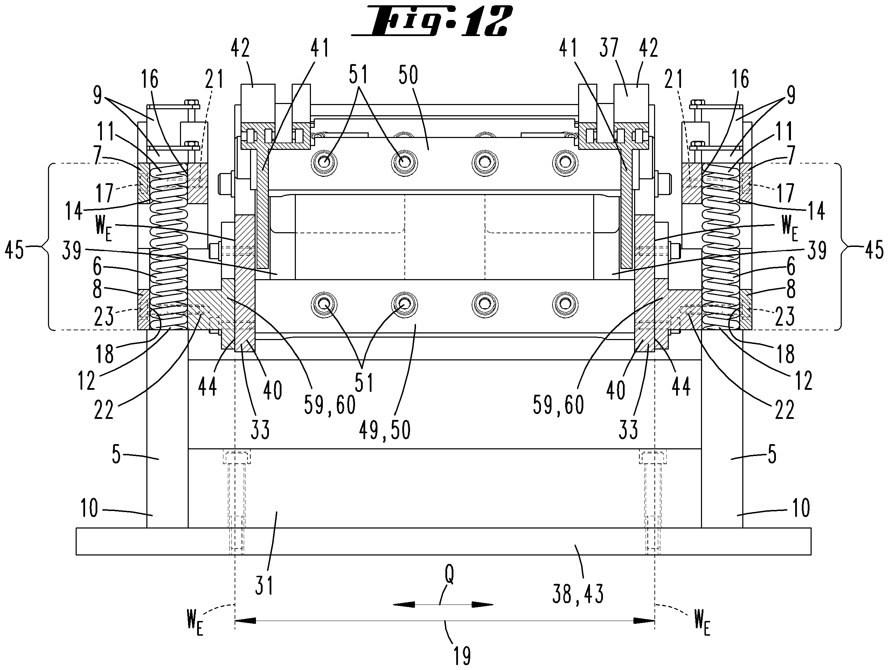

In dem Beispiel gehört zu jeder Aufhängungseinheit 4 eine Befestigungseinrichtung 59. Diese umfasst ein Verbindungsteil 60 und kann insbesondere Schrauben zur Verbindung mit einem zweiten Federanschlussteil 8 und/oder zur Verbindung mit einer Gegenmasse 33 eines Vibrationsförderers 2 (siehe die Figuren 8 - 12) aufweisen. Entsprechend kann das Verbindungsteil 60 Gewindebohrungen (in Fig. 7 nicht gezeigt) aufweisen, in welche Schrauben (in Fig. 7 nicht gezeigt), die durch die Durchgangsbohrungen 29 gesteckt sind, eingeschraubt werden können, und das Verbindungsteil 60 kann Durchgangsbohrungen besitzen, die bei der Montage an einer Gegenmasse 33 eines Vibrationsförderers zum Hindurchstecken von Befestigungsschrauben (in Fig. 7 nicht gezeigt) dienen können.

Die Figuren 8 - 12 zeigen einen erfindungsgemäßen Vibrationsförderer 2 gemäß einem zweiten bevorzugten Ausführungsbeispiel. Dieser umfasst eine Aufhängungseinrichtung 3, welche die, nun mit weiteren Komponenten des Vibrationsförderers 2 montierten, Bestandteile des in Fig. 7 gezeigten Aufhängungssets 1 aufweist. Dabei bilden je zwei durch ein Verbindungsteil 31 verbundene Aufhängungseinheiten 4 eine Aufhängungsbaugruppe 24. Die jeweiligen Verbindungsteile 60 sind mittels Schrauben von seitlich außen an den Wangen 40 der Gegenmasse 33 angeschraubt. Die Gegenmasse 33 ist dadurch an den insgesamt vier Aufhängungseinheiten 4 der Aufhängungseinrichtung 3 schwingfähig aufgehängt. Der Vibrationsantrieb umfasst zwei Magnetantriebe 39, die prinzipiell jeweils den zu dem ersten Beispiel beschriebenen Aufbau besitzen. Allerdings sind Magnetantriebe 39 nebeneinander angebracht.

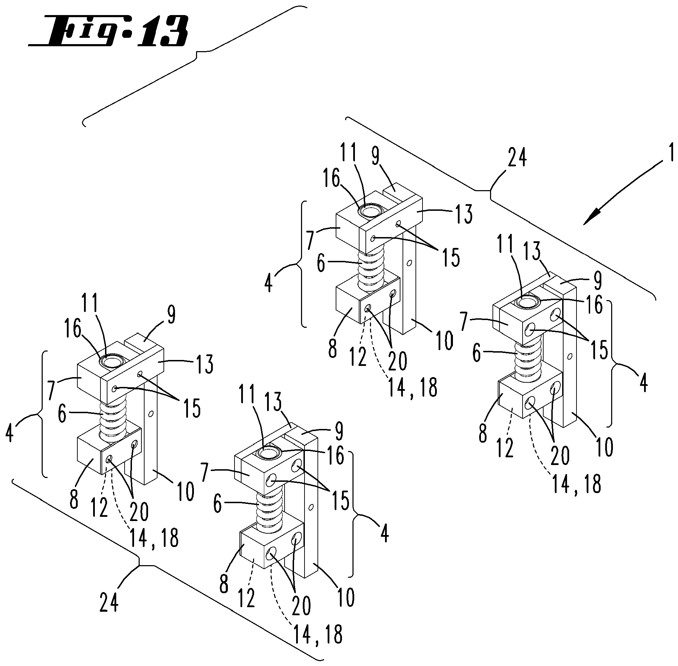

Fig. 13 zeigt ein erfindungsgemäßes Aufhängungsset 1 gemäß einem dritten bevorzugten Ausführungsbeispiel. Dieses umfasst wiederum vier Aufhängungseinheiten 4, von denen jede einen Träger 5, eine Feder 6, ein erstes Federanschlussteil 7 und ein zweites Federanschlussteil 8 aufweist. In dem von Fig. 13 gezeigten, nicht montierten Zustand sind die vier Aufhängungseinheiten 4 völlig voneinander getrennt.

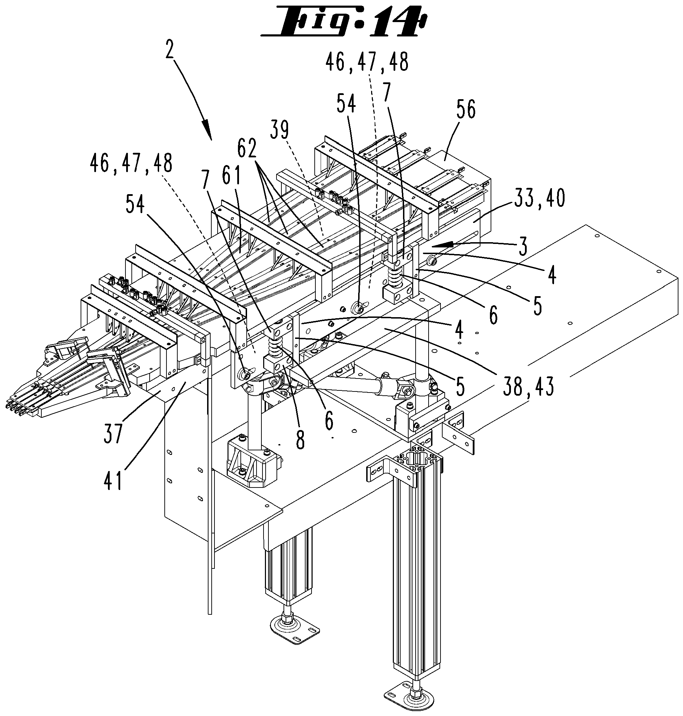

Fig. 14 zeigt einen erfindungsgemäßen Vibrationsförderer 2 gemäß einem dritten bevorzugten Ausführungsbeispiel. Dessen Aufhängungseinrichtung 3 enthält, nun in montiertem Zustand, die Bestandteile des in Fig. 13 gezeigten Aufhängungssets 1. Jeder Träger 5 ist an seinem zweiten Trägerendabschnitt 10 mittels einer in Fig. 14 nicht gezeigten Schraubverbindung an einer in dem Beispiel gerüstartigen Maschinenbasis 38 befestigt. An der Oberseite des Schwingers 37 ist eine insgesamt mit 61 bezeichnete sog. Staustrecke angeschraubt. Diese besitzt mehrere Förderbahnen 62, entlang welcher Fördergutteile (in Fig. 14 nicht mit dargestellt) gefördert und insbesondere sortiert oder dergleichen werden können.

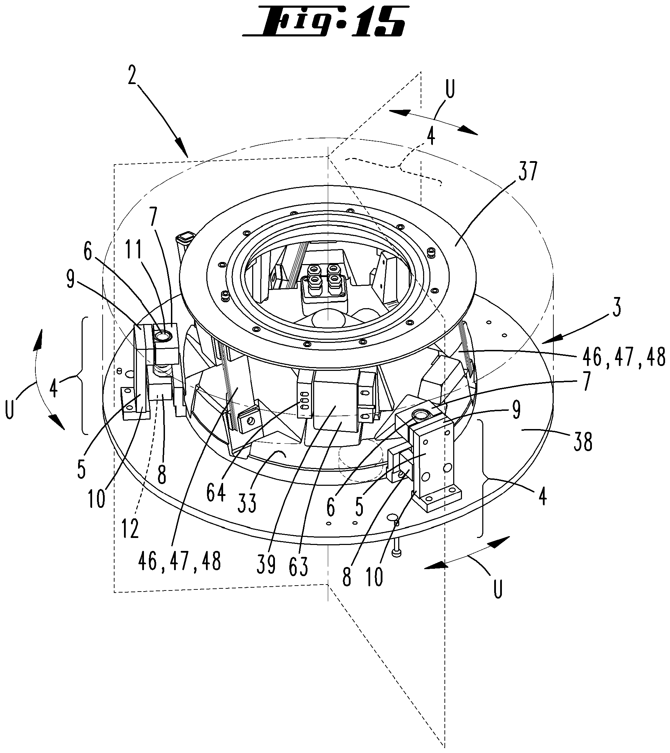

Fig. 15 zeigt einen erfindungsgemäßen Vibrationsförderer 2 gemäß einem vierten bevorzugten Ausführungsbeispiel. Dieser ist als Rund-Vibrationsförderer ausgebildet. Ein Schwinger 37 ist hier mittels drei in Umfangsrichtung gleichmäßig voneinander beabstandeten Blattfederpaketen 48 schwingfähig an einer ebenfalls runden Gegenmasse 33 abgestützt. Der Vibrationsförderer 2 besitzt einen Vibrationsantrieb, der in diesem Beispiel drei Magnetantriebe 39 umfasst; auch diese sind entlang eines Kreisumfangs des Vibrationsförderers 2 in einer Umfangsrichtung U gleichmäßig voneinander beabstandet. Die Umfangsrichtung U des Vibrationsförderers 2 verläuft entlang seines Umfanges, der um eine gedachte geometrische Mittelachse des Vibrationsförderers herum führt. Jeder Magnetantrieb 39 besitzt einen an der Gegenmasse 33 befestigten Elektromagnet 63 und einen an dem Schwinger 37 befestigten Anker 64, der durch einen sich im Betrieb laufend ändernden Magnetspalt von dem Elektromagnet 63 beabstandet ist. Mittels des Vibrationsantriebs kann der Schwinger 37 relativ zu der Gegenmasse 33 zu Schwingungen bzw. zu Vibrationen angeregt werden. An der Oberseite des Schwingers 37 können Aufbauten bspw. zum Fördern, Sortieren (oder dergleichen) von Fördergut bzw. von Kleinteilen montiert werden. Der Vibrationsförderer 2 besitzt eine Aufhängungseinrichtung 3, die in dem Beispiel drei Aufhängungseinheiten 4 umfasst, von denen wiederum jede einen Träger 5, eine Feder 6 sowie ein erstes Federanschlussteil 7 und ein zweites Federanschlussteil 8 aufweist. Die Aufhängungseinheiten 4 sind entlang des Umfanges gleichmäßig voneinander beabstandet. Jeder Träger 5 erstreckt sich senkrecht, ist an seinem oberen, ersten Trägerendabschnitt 9 mittels des ersten Federanschlussteils 7 mit der Feder 6 gekoppelt und ist an seinem unteren, zweiten Trägerendabschnitt 10 auf eine Maschinenbasis 38 aufgeschraubt. Die Feder 6 ist an ihrem unteren Längsende mittels des zweiten Federanschlussteils 8 mit der Gegenmasse 33 verbunden. Dadurch ist die Gegenmasse 33 mittels der drei Aufhängungseinheiten 4 schwingfähig aufgehängt. Fig. 15 zeigt den montierten Zustand, auch wenn Befestigungsschrauben nicht näher gezeigt sind. Fig. 15 zeigt exemplarisch drei gestrichelte Bezugsebenen, die quer zu der Umfangsrichtung U orientiert sind und von denen jede durch je einen der zweiten Trägerabschnitte 10 führt. In seiner jeweiligen Bezugsebene, d. h. in seiner ihm für die Betrachtung zugeordneten Bezugsebene, ist jeder zweite Trägerend-abschnitt 10 außerhalb des Schwingers 37 und außerhalb der Gegenmasse 33 angeordnet. Die drei Aufhängungseinheiten 4 sind am Umfang paarweise gleich weit voneinander beabstandet. Ihre in Figur 15 angedeuteten jeweiligen Bezugsebenen verlaufen in verschiedenen Richtungen. Die beschriebenen Bestandteile der Aufhängungseinrichtung 3 können, unabhängig von ihrer Montage, auch Bestandteile eines erfindungsgemäßen Aufhängungssets 1 gemäß einem vierten bevorzugten Ausführungsbeispiel sein.

Die Erfindung ist nur durch die anhängende Ansprüche definiert.

**Liste der Bezugszeichen**

| | | | |
|---|---|---|---|
| 1 | Aufhängungsset | 27 | Einstellelement |
| 2 | Vibrationsförderer | 28 | Befestigungsmittel |
| 3 | Aufhängungseinrichtung | 29 | Durchgangsbohrung |
| 4 | Aufhängungseinheit | 30 | Trägersegment |
| 5 | Träger | 31 | Verbindungsteil |
| 6 | Feder | 32 | Schraube |
| 7 | erstes Federanschlussteil | 33 | Gegenmasse |
| 8 | zweites Federanschlussteil | 34 | Spalt |
| 9 | erster Trägerendabschnitt | 35 | Gewindedurchgangsbohrung |
| 10 | zweiter Trägerendabschnitt | 36 | Justierelement |
| 11 | erster Federendabschnitt | 37 | Schwinger |
| 12 | zweiter Federendabschnitt | 38 | Maschinenbasis |
| 13 | Halteteil | 39 | Magnetantrieb |
| 14 | Durchgangsöffnung | 40 | Wangen |
| 15 | Durchgangsbohrungen | 41 | Längsträger |
| 16 | erste UmfangsKlemmhalterung | 42 | Längsprofil |
| | | 43 | Basisplatte |
| 17 | Schraube | 44 | Außenseite |
| 18 | zweite UmfangsKlemmhalterung | 45 | Trägerlängenteilabschnitt |
| | | 46 | Feder |
| 19 | Stützplatte | 47 | Blattfedern |
| 20 | Durchgangsbohrung | 48 | Blattfederpaket |
| 21 | Gewindebohrung | 49 | Distanzstück |
| 22 | Gewindebohrung | 50 | Gegenhalter |
| 23 | Schraube | 51 | Schraube |
| 24 | Aufhängungsbaugruppe | 52 | Arretierschraube |
| 25 | Längsabschnitt | 53 | Bogennut |
| 26 | Gewindedurchgangsbohrung | 54 | Arretierschraube |
| 55 | Kontergewicht | | |
| 56 | Kontergewicht | | |
| 57 | Längsverbindungsteil | | |
| 58 | Durchgangsbohrung | | |
| 59 | Befestigungseinrichtung | | |
| 60 | Verbindungsteil | | |
| 61 | Staustrecke | | |
| 62 | Förderbahn | | |
| 63 | Elektromagnet | | |
| 64 | Anker | | |
| 65 | Ende | | |
| | | | |
| F | Förderrichtung | | |
| L | Längsrichtung | | |
| L_{F} | Längsachse | | |
| L_{E} | Längsachse | | |
| U | Umfangsrichtung | | |
| W | Wangenebene | | |
| Q | Querrichtung | | |

## Patentansprüche

1. Aufhängungsset (1) für einen Vibrationsförderer (2), wobei das Aufhängungsset (1) mehrere Aufhängungseinheiten (4) umfasst, von denen jede Aufhängungseinheit (4) einen Träger (5), eine Feder (6) sowie ein erstes Federanschlussteil (7) und ein zweites Federanschlussteil (8) aufweist, wobei der Träger (5) einen ersten Trägerendabschnitt (9) und einen zweiten Trägerendabschnitt (10) aufweist, wobei die Feder (6) einen ersten Federendabschnitt (11) und einen zweiten Federendabschnitt (12) aufweist, wobei der erste Trägerendabschnitt (9) mittels des ersten Federanschlussteils (7) mit dem ersten Federendabschnitt (11) gekoppelt ist, und wobei es sich bei den Federn (6) um Zylinderfedern, insbesondere um Zylinderdruckfedern, handelt, **dadurch gekennzeichnet, dass** entweder die Aufhängungseinheiten (4) voneinander getrennt sind oder die Aufhängungseinheiten (4) paarweise nur mittels einer direkten oder indirekten Verbindung ihrer jeweiligen zweiten Trägerendabschnitte (10) miteinander verbunden sind oder die Aufhängungseinheiten (4) paarweise nur mittels einer direkten oder indirekten Verbindung ihrer jeweiligen zweiten Federanschlussteile (8) miteinander verbunden sind,.

2. Aufhängungsset (1) für einen Vibrationsförderer (2), wobei das Aufhängungsset (1) mehrere Aufhängungseinheiten (4) umfasst, von denen jede Aufhängungseinheit (4) einen Träger (5), eine Feder (6) sowie ein erstes Federanschlussteil (7) und ein zweites Federanschlussteil (8) aufweist, wobei der Träger (5) einen ersten Trägerendabschnitt (9) und einen zweiten Trägerendabschnitt (10) aufweist, wobei die Feder (6) einen ersten Federendabschnitt (11) und einen zweiten Federendabschnitt (12) aufweist und wobei der erste Trägerendabschnitt (9) mittels des ersten Federanschlussteils (7) mit dem ersten Federendabschnitt (11) gekoppelt ist, wobei die Aufhängungseinheiten (4) paarweise nur mittels einer direkten oder indirekten Verbindung ihrer jeweiligen zweiten Trägerendabschnitte (10) miteinander und mittels einer direkten oder indirekten Verbindung ihrer jeweiligen zweiten Federanschlussteile (8) miteinander verbunden sind, **dadurch gekennzeichnet, dass** das Aufhängungsset (1) eine Aufhängungsbaugruppe oder zwei oder mehr Aufhängungsbaugruppen (24) umfasst, wobei jede Aufhängungsbaugruppe (24) eine erste Aufhängungseinheit (4) und eine zweite Aufhängungseinheit (4) aufweist, dass jede Aufhängungsbaugruppe (24) eine Stützplatte (19) umfasst und dass betreffend eine jeweilige Aufhängungsbaugruppe (24) die Feder (6) der ersten Aufhängungseinheit (4) an ihrem zweiten Federendabschnitt (12) mittels des zweiten Federanschlussteils (8) der ersten Aufhängungseinheit (4) an die Stützplatte (19) an einer ersten Seite der Stützplatte (19) angeschlossen ist und die Feder (6) der zweiten Aufhängungseinheit (4) an ihrem zweiten Federendabschnitt (12) mittels des zweiten Federanschlussteils (8) der zweiten Aufhängungseinheit (4) an die Stützplatte (19) an einer zu der ersten Seite entgegengesetzten, zweiten Seite der Stützplatte (19) angeschlossen ist.

3. Aufhängungsset (1) gemäß Anspruch 1 oder Anspruch 2, **dadurch gekennzeichnet, dass** an jeder Aufhängungseinheit (4) der Träger (5) an dem zweiten Trägerendabschnitt (10) ein Befestigungsmittel (28) aufweist oder mit einem Befestigungsmittel (28) verbunden ist, insbesondere zur Befestigung an einer Maschinenbasis eines Vibrationsförderers (2).

4. Aufhängungsset (1) gemäß einem der vorangehenden Ansprüche, **dadurch gekennzeichnet, dass** sich betreffend eine jeweilige Aufhängungseinheit (4) ihre Feder (6) entlang, insbesondere parallel zu, einem Längsabschnitt (25) ihres Trägers (5) erstreckt.

5. Aufhängungsset (1) gemäß einem der vorangehenden Ansprüche, **dadurch gekennzeichnet, dass** an jeder Aufhängungseinheit (4) mittels des ersten Federanschlussteils (7) eine erste Umfangs-Klemmhalterung (16) gebildet ist, in welcher der erste Federendabschnitt (11) eingespannt ist, und insbesondere mittels des zweiten Federanschlussteile (8) eine zweite Umfangs-Klemmhalterung (18) gebildet ist, in welcher der zweite Federendabschnitt (12) eingespannt ist.

6. Aufhängungsset (1) gemäß einem der vorangehenden Ansprüche, **dadurch gekennzeichnet, dass** an der ersten Aufhängungseinheit (4) und an der zweiten Aufhängungseinheit (4) an einem mit dem jeweiligen ersten Trägerendabschnitt (9) verbundenen Halteteil (13) oder an dem jeweiligen ersten Trägerendabschnitt (9) eine Gewindedurchgangsbohrung (26) ausgebildet ist und dass durch jede dieser Gewindedurchgangsbohrungen (26) je ein mit Gewinde versehenes Einstellelement (27), insbesondere ein Schraube, hindurchgeschraubt ist, wobei sich eine jeweilige geometrische Längsachse (L_{E}) der Einstellelemente (27) senkrecht zu einer mittig zwischen der ersten Aufhängungseinheit (4) und der zweiten Aufhängungseinheit (4) hindurchführenden geometrischen Mittelebene erstreckt.

7. Aufhängungsset (1) gemäß einem der Ansprüche 1, 3 - 6, soweit nicht auf Anspruch 2 zurückbezogen, **dadurch gekennzeichnet, dass** das Aufhängungsset (1) eine Aufhängungsbaugruppe (24) oder zwei oder mehr Aufhängungsbaugruppen (24) umfasst, wobei jede Aufhängungsbaugruppe (24) eine erste Aufhängungseinheit (4) und eine zweite Aufhängungseinheit (4) aufweist.

8. Aufhängungsset (1) gemäß einem der vorangehenden Ansprüche 2 - 7, **dadurch gekennzeichnet, dass** jede Aufhängungsbaugruppe (24) ein Verbindungsteil (31) aufweist, wobei betreffend eine jeweilige Aufhängungsbaugruppe (24) der zweite Trägerendabschnitt (10) des Trägers (5) der ersten Aufhängungseinheit (4) mit dem Verbindungsteil (31) an einer ersten Seite des Verbindungsteils (31) verbunden ist und der zweite Trägerendabschnitt (10) des Trägers (5) der zweiten Aufhängungseinheit (4) mit dem Verbindungsteil (31) an einer der ersten Seite entgegengesetzten, zweiten Seite des Verbindungsteils (31) verbunden ist.

9. Aufhängungsset (1) gemäß einem der vorangehenden Ansprüche, **dadurch gekennzeichnet, dass** betreffend jede Aufhängungseinheit (4) der zweite Trägerendabschnitt (10) des Trägers (5) ein zu der geometrischen Längsachse (L_{F}) der Feder (6) quer verlaufendes Trägersegment (30) aufweist, dass zwischen dem Trägersegment (30) und dem zweiten Federanschlussteil (8) ein Spalt (34) gebildet ist und dass sich durch das Trägersegment (30) eine quer zu dem Spalt (34) gerichtete Gewindedurchgangsbohrung (35) erstreckt, durch die ein mit Gewinde versehenes Justierelement (36), insbesondere eine Schraube, hindurchgeschraubt ist, so dass ein freies Ende (65) des Justierelements (36) in den Spalt (34) hineinragt.

10. Aufhängungsset (1) gemäß einem der Ansprüche 1, 3 - 9, soweit nicht auf Anspruch 2 zurückbezogen, **dadurch gekennzeichnet, dass** jede Aufhängungsbaugruppe (34) eine Stützplatte (19) umfasst und dass betreffend eine jeweilige Aufhängungsbaugruppe (34) die Feder (6) der ersten Aufhängungseinheit (4) an ihrem zweiten Federendabschnitt (12) mittels des zweiten Federanschlussteils (8) der ersten Aufhängungseinheit (4) an die Stützplatte (19) an einer ersten Seite der Stützplatte (19) angeschlossen ist und die Feder (6) der zweiten Aufhängungseinheit (4) an ihrem zweiten Federendabschnitt (12) mittels des zweiten Federanschlussteils (8) der zweiten Aufhängungseinheit (4) an die Stützplatte (19) an einer zu der ersten Seite entgegengesetzten, zweiten Seite der Stützplatte (19) angeschlossen ist, wobei insbesondere vorgesehen ist, dass in einer zu den geometrischen Längsachsen (L_{F}) der Federn (6) parallelen Richtung ein Abstand zwischen dem Verbindungsteil (31) und der Stützplatte (19) weniger als 10 mm, insbesondere 5 mm oder etwa 5 mm beträgt.

11. Aufhängungsset (1) gemäß einem der vorangehenden Ansprüche 1, 3 - 9, soweit nicht auf Anspruch 2 zurückbezogen, **dadurch gekennzeichnet, dass** das Aufhängungsset (1) Befestigungseinrichtungen (59) umfasst, und dass an jeder Aufhängungseinheit (4) die Feder (6) an ihrem zweiten Federendabschnitt (12) mittels des zweiten Federanschlussteils an eine Befestigungseinrichtung (59) angeschlossen oder anschließbar ist.

12. Vibrationsförderer (2), aufweisend einen Schwinger (37), eine Gegenmasse (33), eine Maschinenbasis (38), eine Aufhängungseinrichtung (3) und einen Vibrationsantrieb, wobei der Schwinger (37) mittels einer ersten Federgruppe mit der Gegenmasse (33) verbunden und dadurch relativ zu der Gegenmasse (33) beweglich gehalten ist, wobei der Schwinger (37) mittels des Vibrationsantriebs antreibbar ist, wobei die Gegenmasse (33) mittels der Aufhängungseinrichtung (3) mit der Maschinenbasis (38) verbunden und dadurch relativ zu der Maschinenbasis (38) beweglich gehalten ist, wobei die Aufhängungseinrichtung (3) mehrere Aufhängungseinheiten (4) umfasst, von denen jede Aufhängungseinheit (4) einen Träger (5), eine Feder (6), ein erstes Federanschlussteil (7) und ein zweites Federanschlussteil (8) aufweist, wobei deren Träger (5) einen ersten Trägerendabschnitt (9) und einen zweiten Trägerendabschnitt (10) aufweist, wobei deren Feder (6) einen ersten Federendabschnitt (11) und einen zweiten Federendabschnitt (12) aufweist, wobei die Federn (6) der Aufhängungseinheiten (4) eine zweite Federgruppe bilden, wobei an einer jeweiligen Aufhängungseinheit (4) der erste Trägerendabschnitt (9) mittels des ersten Federanschlussteils (7) mit dem ersten Federendabschnitt (11) gekoppelt ist, der zweite Trägerendabschnitt (10) mit der Maschinenbasis (38) verbunden ist und das zweite Federanschlussteil (8) mit der Gegenmasse (33) verbunden ist, wobei der Vibrationsförderer (2) als Linear-Vibrationsförderer ausgebildet ist, wobei ein jeweiliger zweiter Trägerendabschnitt (10) in einer durch ihn führenden Bezugsebene, die zu einer Längsrichtung (L) des Linear-Vibrationsförderers quer orientiert ist, außerhalb des Schwingers (37) und insbesondere außerhalb der Gegenmasse (33) angeordnet ist, **dadurch gekennzeichnet, dass** die Gegenmasse (33) zwei in einer Längsrichtung (L) des Vibrationsförderers (2) orientierte, quer voneinander beabstandete Wangen (40) aufweist, wobei jede der beiden Wangen (40) mit einer Außenseite (44) von ihr eine über ihre Außenseite (44) hinausreichende geometrische Wangenebene (W_{E}) aufspannt, und dass jeder der zweiten Trägerendabschnitte (10) seitlich außerhalb des von den beiden Wangenebenen (W_{E}) berandeten Zwischenraums angeordnet ist.

13. Vibrationsförderer (2), aufweisend einen Schwinger (37), eine Gegenmasse (33), eine Maschinenbasis (38), eine Aufhängungseinrichtung (3) und einen Vibrationsantrieb, wobei der Schwinger (37) mittels einer ersten Federgruppe mit der Gegenmasse (33) verbunden und dadurch relativ zu der Gegenmasse (33) beweglich gehalten ist, wobei der Schwinger (37) mittels des Vibrationsantriebs antreibbar ist, wobei die Gegenmasse (33) mittels der Aufhängungseinrichtung (3) mit der Maschinenbasis (38) verbunden und dadurch relativ zu der Maschinenbasis (38) beweglich gehalten ist, wobei die Aufhängungseinrichtung (3) mehrere Aufhängungseinheiten (4) umfasst, von denen jede Aufhängungseinheit (4) einen Träger (5), eine Feder (6), ein erstes Federanschlussteil (7) und ein zweites Federanschlussteil (8) aufweist, wobei deren Träger (5) einen ersten Trägerendabschnitt (9) und einen zweiten Trägerendabschnitt (10) aufweist, wobei deren Feder (6) einen ersten Federendabschnitt (11) und einen zweiten Federendabschnitt (12) aufweist, wobei die Federn (6) der Aufhängungseinheiten (4) eine zweite Federgruppe bilden, wobei an einer jeweiligen Aufhängungseinheit (4) der erste Trägerendabschnitt (9) mittels des ersten Federanschlussteils (7) mit dem ersten Federendabschnitt (11) gekoppelt ist, der zweite Trägerendabschnitt (10) mit der Maschinenbasis (38) verbunden ist und das zweite Federanschlussteil (8) mit der Gegenmasse (33) verbunden ist, **dadurch gekennzeichnet, dass** der Vibrationsförderer (2) als Rund-Vibrationsförderer ausgebildet ist, wobei ein jeweiliger zweiter Trägerendabschnitt (10) in einer durch ihn führenden Bezugsebene, die zu einer Umfangsrichtung (U) des Rund-Vibrationsförderers quer orientiert ist, außerhalb des Schwingers (37) und außerhalb der Gegenmasse (33) angeordnet ist.

14. Vibrationsförderer (2) gemäß einem der vorangehenden Ansprüche 12 - 13, **dadurch gekennzeichnet, dass** sich ein jeweiliger Träger (5) in einem Trägerlängenteilabschnitt (45), der sich entlang der gesamten Länge der mit ihm verbundenen Feder (6) erstreckt, in einer jeweiligen durch ihn verlaufenden, zu der Längsrichtung (L) des Vibrationsförderers (2) quer orientierten Bezugsebene in dem gesamten Trägerlängenteilabschnitt (45) oder in einem überwiegenden Anteil des Trägerlängenteilabschnittes (45) seitlich des Schwingers (37) und insbesondere seitlich der Gegenmasse (33) erstreckt.

15. Vibrationsförderer (2) gemäß einem der vorangehenden Ansprüche 12 und 14, **dadurch gekennzeichnet, dass** die Aufhängungseinrichtung (3) zwei Aufhängungsbaugruppen (24) umfasst, wobei jede Aufhängungsbaugruppe (24) eine erste Aufhängungseinheit (4) und eine zweite Aufhängungseinheit (4) aufweist, wobei insbesondere vorgesehen ist, dass an einer jeweiligen Aufhängungsbaugruppe (24) an der ersten Aufhängungseinheit (4) und an der zweiten Aufhängungseinheit (4) an einem mit dem jeweiligen ersten Trägerendabschnitt (9) verbundenen Halteteil (13) oder an dem jeweiligen ersten Trägerendabschnitt (9) eine Gewindedurchgangsbohrung (26) ausgebildet ist, wobei durch jede dieser Gewindedurchgangsbohrungen (26) je ein mit Gewinde versehenes Einstellelement (27), insbesondere ein Schraube, hindurchgeschraubt ist und wobei sich eine jeweilige geometrische Längsachse der Einstellelemente (27) in ihrer geometrischen Verlängerung durch den Schwinger (37) erstreckt.

16. Vibrationsförderer (2) gemäß einem der vorangehenden Ansprüche 12,14 und 15, **dadurch gekennzeichnet, dass** jede Aufhängungsbaugruppe (24) ein Verbindungsteil (31) aufweist, wobei betreffend eine jeweilige Aufhängungsbaugruppe (24) der zweite Trägerendabschnitt (10) des Trägers (59 der ersten Aufhängungseinheit (4) mit dem Verbindungsteil (31) an einer ersten Seite des Verbindungsteils (31) verbunden ist und der zweite Trägerendabschnitt (10) des Trägers (5) der zweiten Aufhängungseinheit (4) mit dem Verbindungsteil (31) an einer der ersten Seite entgegengesetzten, zweiten Seite des Verbindungsteils (31) verbunden ist, wobei insbesondere vorgesehen ist, dass das Verbindungsteil (31) Durchgangsbohrungen aufweist, die zu Gewindebohrungen in der Maschinenbasis (38) fluchten, wobei zur Befestigung des Verbindungsteils (31) an der Maschinenbasis (38) durch jede Durchgangsbohrung je eine Schraube in eine Gewindebohrung eingeschraubt ist.

17. Vibrationsförderer (2) gemäß einem der vorangehenden Ansprüche 12, 14 -16, **dadurch gekennzeichnet, dass** betreffend jede Aufhängungseinheit (4) der zweite Trägerendabschnitt (10) des Trägers (5) ein zu der geometrischen Längsachse (L_{F}) der Feder (6) quer verlaufendes Trägersegment (30) aufweist, dass zwischen dem Trägersegment (30) und dem zweiten Federanschlussteil (8) ein Spalt (34) gebildet ist und dass sich durch das Trägersegment (30) eine quer zu dem Spalt (34) gerichtete Gewindedurchgangsbohrung (35) erstreckt, durch die ein mit Gewinde versehenes Justierelement (36), insbesondere eine Schraube, hindurchgeschraubt ist, so dass ein freies Ende des Justierelements (36) in den Spalt (34) hineinragt.

18. Vibrationsförderer (2) gemäß einem der vorangehenden Ansprüche 12, 14 -17, **dadurch gekennzeichnet, dass** jede Aufhängungsbaugruppe (24) eine Stützplatte (19) umfasst und dass betreffend eine jeweilige Aufhängungsbaugruppe (24) die Feder (6) der ersten Aufhängungseinheit (4) an ihrem zweiten Federendabschnitt (12) mittels des zweiten Federanschlussteils (8) der ersten Aufhängungseinheit (4) an die Stützplatte (19) an einer ersten Seite der Stützplatte (19) angeschlossen ist und die Feder (6) der zweiten Aufhängungseinheit (4) an ihrem zweiten Federendabschnitt (12) mittels des zweiten Federanschlussteils (8) der zweiten Aufhängungseinheit (4) an die Stützplatte (19) an einer zu der ersten Seite entgegengesetzten, zweiten Seite der Stützplatte (19) angeschlossen ist, und dass die Gegenmasse (33) auf den Stützplatten (19) der Aufhängungsbaugruppen (24) abgestützt ist.

19. Vibrationsförderer (2) gemäß einem der vorangehenden Ansprüche 12, 14 -17, **dadurch gekennzeichnet, dass** eine jeweilige Aufhängungsbaugruppe (24) eine erste Befestigungseinrichtung (59) und eine zweite Befestigungseinrichtung (59) umfasst, dass betreffend eine jeweilige Aufhängungsbaugruppe (24) die Feder (6) der ersten Aufhängungseinheit (4) an ihrem zweiten Federendabschnitt (12) mittels des zweiten Federanschlussteils (8) der ersten Aufhängungseinheit (4) an die erste Befestigungseinrichtung (59) angeschlossen ist und die Feder (6) der zweiten Aufhängungseinheit (4) an ihrem zweiten Federendabschnitt (12) mittels des zweiten Federanschlussteils (8) der zweiten Aufhängungseinheit (4) an die zweite Befestigungseinrichtung angeschlossen ist, und dass die erste Befestigungseinrichtung (59) an der Gegenmasse (33) an einer ersten Seite der Gegenmasse (33) angebracht, insbesondere angeschraubt, ist und die zweite Befestigungseinrichtung (59) an der Gegenmasse (33) an einer der ersten Seite gegenüber liegenden zweiten Seite der Gegenmasse (33) angebracht, insbesondere angeschraubt, ist.

20. Vibrationsförderer (2) gemäß einem der vorangehenden Ansprüche 12 - 19, **dadurch gekennzeichnet, dass** der Vibrationsantrieb an die Erzeugung einer Schwingungsbewegungsform des Schwingers (37) angepasst ist, durch die auf dem Schwinger (37) befindliches Fördergutteile zu Mikrowürfen, insbesondere zu parabelformartigen Mikrowürfen, angeregt werden.

21. Vibrationsförderer (2) gemäß einem der vorangehenden Ansprüche 12 - 20, **dadurch gekennzeichnet, dass** der Vibrationsförderer (2) eine Führungsfläche, insbesondere zumindest eine Fördergutbahn, für Fördergutteile aufweist, die an dem Schwinger (37) befestigt ist und die sich parallel zu einer Aufstellebene des Vibrationsförderers (2), insbesondere horizontal, erstreckt, wobei insbesondere vorgesehen ist, dass an dem Schwinger (37) Mittel zum Sortieren von Fördergutteilen angebracht sind.

## Claims

1. Suspension set (1) for a vibratory conveyor (2), wherein the suspension set (1) comprises a plurality of suspension units (4), of which each suspension unit (4) has a carrier (5), a spring (6) as well as a first spring connection part (7) and a second spring connection part (8), wherein the carrier (5) has a first carrier end portion (9) and a second carrier end portion (10), wherein the spring (6) has a first spring end portion (11) and a second spring end portion (12), wherein the first carrier end portion (9) is coupled to the first spring end portion (11) by means of the first spring connection part (7), and wherein the springs (6) are cylindrical springs, in particular cylindrical compression springs, **characterized in that** either the suspension units (4) are separated from one another or the suspension units (4) are connected to one another in pairs only by means of a direct or indirect connection of their respective second carrier end portions (10) or the suspension units (4) are connected to one another in pairs only by means of a direct or indirect connection of their respective second spring connection parts (8).

2. Suspension set (1) for a vibratory conveyor (2), wherein the suspension set (1) comprises a plurality of suspension units (4), of which each suspension unit (4) has a carrier (5), a spring (6) as well as a first spring connection part (7) and a second spring connection part (8), wherein the carrier (5) has a first carrier end portion (9) and a second carrier end portion (10), wherein the spring (6) has a first spring end portion (11) and a second spring end portion (12) and wherein the first carrier end portion (9) is coupled to the first spring end portion (11) by means of the first spring connection part (7), wherein the suspension units (4) are connected to one another in pairs only by means of a direct or indirect connection of their respective second carrier end portions (10) and by means of a direct or indirect connection of their respective second spring connection parts (8), **characterized in that** the suspension set (1) comprises a suspension assembly or two or more suspension assemblies (24), wherein each suspension assembly (24) has a first suspension unit (4) and a second suspension unit (4), **in that** each suspension assembly (24) comprises a support plate (19) and **in that**, with respect to a respective suspension assembly (24), the spring (6) of the first suspension unit (4) is connected at its second spring end portion (12) to the support plate (19) on a first side of the support plate (19) by means of the second spring connection part (8) of the first suspension unit (4) and the spring (6) of the second suspension unit (4) is connected at its second spring end portion (12) to the support plate (19) on a second side of the support plate (19) opposite the first side by means of the second spring connection part (8) of the second suspension unit (4).

3. Suspension set (1) according to Claim 1 or Claim 2, **characterized in that** on each suspension unit (4), the carrier (5) has an attachment means (28) on the second carrier end portion (10) or is connected to an attachment means (28), in particular for attachment to a machine base of a vibratory conveyor (2).

4. Suspension set (1) according to one of the preceding claims, **characterized in that**, with respect to a respective suspension unit (4), its spring (6) extends along, in particular parallel to, a longitudinal section (25) of its carrier (5).

5. Suspension set (1) according to one of the preceding claims, **characterized in that** a first circumferential clamp bracket (16) is formed on each suspension unit (4) by means of the first spring connection part (7), in which the first spring end portion (11) is clamped, and in particular a second circumferential clamp bracket (18) is formed by means of the second spring connection part (8), in which the second spring end portion (12) is clamped.

6. Suspension set (1) according to one of the preceding claims, **characterized in that** a threaded through-hole (26) is formed on the first suspension unit (4) and on the second suspension unit (4) on a holding part (13) connected to the respective first carrier end portion (9) or on the respective first carrier end portion (9) and **in that** a threaded adjusting element (27), in particular a screw, is screwed through each of these threaded through-holes (26), wherein a respective geometric longitudinal axis (L_{E}) of the adjusting elements (27) extends perpendicular to a geometric central plane passing centrally between the first suspension unit (4) and the second suspension unit (4).

7. Suspension set (1) according to one of Claims 1, 3 - 6, insofar as not referred back to Claim 2, **characterized in that** the suspension set (1) comprises a suspension assembly (24) or two or more suspension assemblies (24), wherein each suspension assembly (24) has a first suspension unit (4) and a second suspension unit (4).

8. Suspension set (1) according to one of the preceding Claims 2 - 7, **characterized in that** each suspension assembly (24) has a connecting part (31), wherein, regarding a respective suspension assembly (24), the second carrier end portion (10) of the carrier (5) of the first suspension unit (4) is connected to the connecting part (31) on a first side of the connecting part (31) and the second carrier end portion (10) of the carrier (5) of the second suspension unit (4) is connected to the connecting part (31) on a second side of the connecting part (31) opposite the first side.

9. Suspension set (1) according to one of the preceding claims, **characterized in that**, regarding each suspension unit (4), the second carrier end portion (10) of the carrier (5) has a carrier segment (30) running transversely to the geometric longitudinal axis (L_{F}) of the spring (6), **in that** a gap (34) is formed between the carrier segment (30) and the second spring connection part (8) and **in that** a threaded through-hole (35) directed transversely to the gap (34) extends through the carrier segment (30), through which a threaded adjustment element (36), in particular a screw, is screwed such that a free end (65) of the adjustment element (36) protrudes into the gap (34).

10. Suspension set (1) according to one of Claims 1, 3 - 9, insofar as not referred back to Claim 2, **characterized in that** each suspension assembly (34) comprises a support plate (19) and **in that**, with respect to a respective suspension assembly (34), the spring (6) of the first suspension unit (4) is connected at its second spring end portion (12) to the support plate (19) on a first side of the support plate (19) by means of the second spring connection part (8) of the first suspension unit (4) and the spring (6) of the second suspension unit (4) is connected at its second spring end portion (12) to the support plate (19) on a second side of the support plate (19) opposite the first side by means of the second spring connection part (8) of the second suspension unit (4), wherein in particular it is provided that in a direction parallel to the geometric longitudinal axes (L_{F}) of the springs (6), a distance between the connecting part (31) and the support plate (19) is less than 10 mm, in particular 5 mm or approximately 5 mm.

11. Suspension set (1) according to one of the preceding Claims 1, 3 - 9, insofar as not referred back to Claim 2, **characterized in that** the suspension set (1) comprises attachment devices (59), and **in that** on each suspension unit (4), the spring (6) is connected or can be connected at its second spring end portion (12) to an attachment device (59) by means of the second spring connection part.

12. Vibratory conveyor (2), having an oscillator (37), a counter-weight (33), a machine base (38), a suspension device (3) and a vibration drive, wherein the oscillator (37) is connected to the counter-weight (33) by means of a first spring assembly and is thereby held movably relative to the counter-weight (33), wherein the oscillator (37) can be driven by means of the vibration drive, wherein the counter-weight (33) is connected to the machine base (38) by means of the suspension device (3) and is thereby held movably relative to the machine base (38), wherein the suspension device (3) comprises a plurality of suspension units (4), of which each suspension unit (4) has a carrier (5), a spring (6), a first spring connection part (7) and a second spring connection part (8), wherein the carrier (5) has a first carrier end portion (9) and a second carrier end portion (10), wherein the spring (6) has a first spring end portion (11) and a second spring end portion (12), wherein the springs (6) of the suspension units (4) form a second spring assembly, wherein on a respective suspension unit (4), the first carrier end portion (9) is coupled to the first spring end portion (11) by means of the first spring connection part (7), the second carrier end portion (10) is connected to the machine base (38) and the second spring connection part (8) is connected to the counter-weight (33), wherein the vibratory conveyor (2) is designed as a linear vibratory conveyor, wherein a respective second carrier end portion (10) is arranged outside the oscillator (37) and in particular outside the counter-weight (33) in a reference plane passing through it, which is orientated transversely to a longitudinal direction (L) of the linear vibratory conveyor, **characterized in that** the counter-weight (33) has two cheeks (40) transversely spaced apart from one another and oriented in a longitudinal direction (L) of the vibratory conveyor (2), wherein each of the two cheeks (40) with an outer side (44) thereof spans a geometric cheek plane (W_{E}) extending beyond its outer side (44), and **in that** each of the two carrier end portions (10) is arranged laterally outside the intermediate space bordered by the two cheek planes (W_{E}).

13. Vibratory conveyor (2), having an oscillator (37), a counter-weight (33), a machine base (38), a suspension device (3) and a vibration drive, wherein the oscillator (37) is connected to the counter-weight (33) by means of a first spring assembly and is thereby held movably relative to the counter-weight (33), wherein the oscillator (37) can be driven by means of the vibration drive, wherein the counter-weight (33) is connected to the machine base (38) by means of the suspension device (3) and is thereby held movably relative to the machine base (38), wherein the suspension device (3) comprises a plurality of suspension units (4), of which each suspension unit (4) has a carrier (5), a spring (6), a first spring connection part (7) and a second spring connection part (8), wherein the carrier (5) has a first carrier end portion (9) and a second carrier end portion (10), wherein the spring (6) has a first spring end portion (11) and a second spring end portion (12), wherein the springs (6) of the suspension units (4) form a second spring assembly, wherein on a respective suspension unit (4), the first carrier end portion (9) is coupled to the first spring end portion (11) by means of the first spring connection part (7), the second carrier end portion (10) is connected to the machine base (38) and the second spring connection part (8) is connected to the counter-weight (33), **characterized in that** the vibratory conveyor (2) is designed as a circular vibratory conveyor, wherein a respective second carrier end portion (10) is arranged outside the oscillator (37) and outside the counter-weight (33) in a reference plane passing through it, which is oriented transversely to a circumferential direction (U) of the circular vibratory conveyor.

14. Vibratory conveyor (2) according to one of the preceding Claims 12 -13, **characterized in that** a respective carrier (5) extends in a carrier length section (45), which extends along the entire length of the spring (6) connected to it, in a respective reference plane extending through it and orientated transversely to the longitudinal direction (L) of the vibratory conveyor (2) in the entire carrier length section (45) or in a predominant part of the carrier length section (45) to the side of the oscillator (37) and in particular to the side of the counter-weight (33).

15. Vibratory conveyor (2) according to one of the preceding Claims 12 and 14, **characterized in that** the suspension device (3) comprises two suspension assemblies (24), wherein each suspension assembly (24) has a first suspension unit (4) and a second suspension unit (4), wherein in particular it is provided that on a respective suspension assembly (24), a threaded through-hole (26) is formed on the first suspension unit (4) and on the second suspension unit (4) on a holding part (13) connected to the respective first carrier end portion (9) or on the respective first carrier end portion (9), wherein a threaded adjusting element (27), in particular a screw, is screwed through each of these threaded through-holes (26) and wherein a respective geometric longitudinal axis of the adjusting elements (27) extends in its geometric extension through the oscillator (37).

16. Vibratory conveyor (2) according to one of the preceding Claims 12, 14 and 15, **characterized in that** each suspension assembly (24) has a connecting part (31), wherein, regarding a respective suspension assembly (24), the second carrier end portion (10) of the carrier (5) of the first suspension unit (4) is connected to the connecting part (31) on a first side of the connecting part (31) and the second carrier end portion (10) of the carrier (5) of the second suspension unit (4) is connected to the connecting part (31) on a second side of the connecting part (31) opposite the first side, wherein in particular it is provided that the connecting part (31) has through-holes, which align with threaded holes in the machine base (38), wherein a screw is screwed through each through-hole into a threaded hole in order to attach the connecting part (31) to the machine base (38).

17. Vibratory conveyor (2) according to one of the preceding claims 12, 14 - 16, **characterized in that**, regarding each suspension unit (4), the second carrier end portion (10) of the carrier (5) has a carrier segment (30) running transversely to the geometric longitudinal axis (L_{F}) of the spring (6), **in that** a gap (34) is formed between the carrier segment (30) and the second spring connection part (8) and **in that** a threaded through-hole (35) directed transversely to the gap (34) extends through the carrier segment (30), through which a threaded adjustment element (36), in particular a screw, is screwed such that a free end of the adjustment element (36) protrudes into the gap (34).

18. Vibratory conveyor (2) according to one of the preceding Claims 12, 14 - 17, **characterized in that** each suspension assembly (24) comprises a support plate (19) and **in that**, with respect to a respective suspension assembly (24), the spring (6) of the first suspension unit (4) is connected at its second spring end portion (12) to the support plate (19) on a first side of the support plate (19) by means of the second spring connection part (8) of the first suspension unit (4) and the spring (6) of the second suspension unit (4) is connected at its second spring end portion (12) to the support plate (19) on a second side of the support plate (19) opposite the first side by means of the second spring connection part (8) of the second suspension unit (4), and **in that** the counter-weight (33) is supported on the support plates (19) of the suspension assemblies (24).

19. Vibratory conveyor (2) according to one of the preceding Claims 12, 14 - 17, **characterized in that** a respective suspension assembly (24) comprises a first attachment device (59) and a second attachment device (59), **in that**, regarding a respective suspension assembly (24), the spring (6) of the first suspension unit (4) is connected at its second spring end portion (12) to the first attachment device (59) by means of the second spring connection part (8) of the first suspension unit (4) and the spring (6) of the second suspension unit (4) is connected at its second spring end portion (12) to the second attachment device by means of the second spring connection part (8) of the second suspension unit (4), and **in that** the first attachment device (59) is attached to, in particular screwed onto, the counter-weight (33) on a first side of the counter-weight (33), and the second attachment device (59) is attached to, in particular screwed onto, the counter-weight (33) on a second side of the counter-weight (33) opposite the first side.

20. Vibratory conveyor (2) according to one of the preceding Claims 12 - 19, **characterized in that** the vibration drive is adapted to the generation of a form of vibration movement of the oscillator (37), by means of which the conveyed goods located on the oscillator (37) are excited to micro-trajectories, in particular micro-parabolic trajectories.

21. Vibratory conveyor (2) according to one of the preceding Claims 12 - 20, **characterized in that** the vibratory conveyor (2) has a guide surface, in particular at least one conveyed goods path, for conveyed goods, which is attached to the oscillator (37) and which extends parallel to an installation plane of the vibratory conveyor (2), in particular horizontally, wherein in particular it is provided that means for sorting conveyed goods are attached to the oscillator (37).

## Revendications

1. Ensemble de suspension (1), pour un transporteur à vibrations (2), dans lequel l'ensemble de suspension (1) comprend plusieurs unités de suspension (4), dont chaque unité de suspension (4) présente un support (5), un ressort (6) ainsi qu'une première partie de liaison à ressort (7) et une deuxième partie de liaison à ressort (8), dans lequel le support (5) présente une première section d'extrémité de support (9) et une deuxième section d'extrémité de support (10), dans lequel le ressort (6) présente une première section d'extrémité de ressort (11) et une deuxième section d'extrémité de ressort (12), dans lequel la première section d'extrémité de support (9) est couplée à la première section d'extrémité de ressort (11) au moyen de la première partie de liaison à ressort (7) et dans lequel les ressorts (6) sont des ressorts à cylindre, en particulier des ressorts à compression à cylindre, **caractérisé en ce que** soit les unités de suspension (4) sont séparées les unes des autres soit les unités de suspension (4) sont raccordées par paires uniquement au moyen d'une connexion directe ou indirecte de leurs deuxièmes sections d'extrémité de support (10) respectives ou les unités de suspension (4) sont raccordées les unes aux autres par paires uniquement au moyen d'une connexion directe ou indirecte de leurs deux parties de liaison à ressort (8) respectives.

2. Module de suspension (1) pour un transporteur à vibrations (2), dans lequel l'ensemble de suspension (1) comprend une pluralité d'unités de suspension (4), dont chaque unité de suspension (4) présente un support (5), un ressort (6) et une première partie de liaison à ressort (7) et un deuxième ressort partie de liaison (8), dans lequel le support (5) présente une première section d'extrémité de support (9) et une deuxième section d'extrémité de support (10), dans lequel le ressort (6) présente une première section d'extrémité de ressort (11) et une deuxième section d'extrémité de ressort (12) et dans lequel la première section d'extrémité de support (9) est couplée à la première section d'extrémité de ressort (11) au moyen de la première partie de liaison à ressort (7), dans lequel les unités de suspension (4) sont raccordées par paires uniquement au moyen d'une connexion directe ou indirecte de leurs deuxièmes sections d'extrémité de support (10) respectives ou au moyen d'une connexion directe ou indirecte de leurs deux parties de liaison à ressort (8) respectives, **caractérisé en ce que** l'ensemble de suspension (1) présente un module de suspension ou deux ou plusieurs modules de suspension (24), dans lequel chaque module de suspension (24) présente une première unité de suspension (4) et une deuxième unité de suspension (4), dans lequel chaque module de suspension (24) comprend une plaque de support (19) et que concernant un module de suspension respectif (24), le ressort (6) de la première unité de suspension (4), au niveau de sa deuxième section d'extrémité de ressort (12), est raccordé à la plaque de support (19) sur un premier côté de la plaque de support (19) au moyen de la deuxième partie de liaison à ressort (8) de la première unité de suspension (4) et le ressort (6) de la deuxième unité de suspension (4) au niveau de sa deuxième section d'extrémité de ressort (12) au moyen de la deuxième partie de liaison à ressort (8) de la deuxième unité de suspension (4) est raccordé à la plaque de support (19) sur un deuxième côté de la plaque de support (19) opposé au premier côté.

3. Ensemble de suspension (1) selon la revendication 1 ou la revendication 2, **caractérisé en ce que** sur chaque unité de suspension (4), le support (5) présente un moyen de fixation (28) sur la deuxième section d'extrémité de support (10) ou est raccordé à un moyen de fixation (28), notamment pour une fixation sur une base de machine d'un transporteur à vibrations (2).

4. Ensemble de suspension (1) selon une des revendications précédentes, **caractérisé en ce que**, par rapport à une unité de suspension (4) respective, son ressort (6) s'étend le long, notamment parallèlement à, d'un tronçon longitudinal (25) de son support (5).

5. Ensemble de suspension (1) selon une des revendications précédentes, **caractérisé en ce qu'**un premier support de serrage circonférentiel (16) est formé sur chaque unité de suspension (4) au moyen de la première partie de liaison à ressort (7), dans laquelle est serrée la première section d'extrémité de ressort (11), et en particulier au moyen des deuxièmes parties de liaison à ressort (8), un deuxième support de serrage circonférentiel (18) est formé, dans lequel la deuxième section d'extrémité de ressort (12) est serrée.

6. Ensemble de suspension (1) selon une des revendications précédentes, **caractérisé en ce que** sur la première unité de suspension (4) et sur la deuxième unité de suspension (4), sur une pièce de maintien (13) raccordée à la première section d'extrémité de support (9) respective ou à la première section d'extrémité de support respective (9) un trou traversant fileté (26) est réalisé et que à travers chacun de ces trous traversants filetés (26) un élément de réglage fileté (27), notamment une vis, est vissée de part en part, dans lequel un axe longitudinal géométrique respectif (L_{E}) des éléments de réglage (27) s'étend perpendiculairement à un plan médian géométrique passant au centre entre la première unité de suspension (4) et la deuxième unité de suspension (4).

7. Ensemble de suspension (1) selon une des revendications 1, 3-6, sauf renvoi à la revendication 2, **caractérisé en ce que** l'ensemble de suspension (1) comporte un module de suspension (24) ou deux ou plusieurs modules de suspensions (24), dans lequel chaque module de suspension (24) présente une première unité de suspension (4) et une deuxième unité de suspension (4).

8. Ensemble de suspension (1) selon une des revendications précédentes 2-7, **caractérisé en ce que** chaque module de suspension (24) présente une partie de liaison (31), dans lequel concernant un module de suspension respectif (24), la deuxième section d'extrémité de support (10) du support (5) de la première unité de suspension (4) est raccordée à la partie de liaison (31) sur un premier côté de la partie de liaison (31) et la deuxième section d'extrémité de support (10) du support (5) de la deuxième unité de suspension (4) est raccordée à la partie de liaison (31) sur un deuxième côté de la partie de liaison (31) opposé au premier côté.

9. Ensemble de suspension (1) selon une des revendications précédentes, **caractérisé en ce que**, concernant chaque unité de suspension (4), la deuxième section d'extrémité de support (10) du support (5) présente un segment de support (30) qui s'étend transversalement à l'axe longitudinal géométrique (L_{F}) du ressort (6) et qu'entre le segment de support (30) et la deuxième partie de liaison à ressort (8) un interstice (34) est formé et qu'à travers le segment de support (30) s'étend un trou traversant fileté (35) orienté transversalement à l'interstice (34), à travers lequel est vissé un élément de réglage fileté (36), notamment une vis, de sorte qu'une extrémité libre (65) de l'élément de réglage (36) dépasse en saillie dans l'interstice (34).

10. Ensemble de suspension (1) selon une des revendications 1, 3-9, sauf renvoi à la revendication 2, **caractérisé en ce que** chaque module de suspension (34) comprend une plaque de support (19) et que concernant un module de suspension respectif (34), le ressort (6) de la première unité de suspension (4) au niveau de sa deuxième section d'extrémité de ressort (12) est raccordée à la plaque de support (19) sur un premier côté de la plaque de support (19) au moyen de la deuxième partie de liaison à ressort (8) de la première unité de suspension (4) et le ressort (6) de la deuxième unité de suspension (4) sur sa deuxième section d'extrémité de ressort (12) au moyen de la deuxième partie de liaison de ressort (8) de la deuxième unité de suspension (4) est raccordé à la plaque de support (19) sur un deuxième côté de la plaque de support (19), opposé au premier côté, dans lequel il est notamment prévu que dans une direction parallèle aux grands axes géométriques (L_{F}) des ressorts (6), une distance entre la partie de liaison (31) et la plaque de support (19) soit inférieure à 10 mm, notamment de 5 mm ou d'environ 5 mm.

11. Ensemble de suspension (1) selon une des revendications précédentes 1, 3-9, sauf renvoi à la revendication 2, **caractérisé en ce que** l'ensemble de suspension (1) comprend des dispositifs de fixation (59), et sur chaque unité de suspension (4), le ressort (6) est raccordé ou peut être raccordé au niveau de sa deuxième section d'extrémité de ressort (12) à un dispositif de fixation (59) au moyen de la deuxième partie de liaison de ressort.

12. Transporteur à vibrations (2), comportant un oscillateur (37), un contrepoids (33), une base de machine (38), un dispositif de suspension (3) et un entraînement vibrant, dans lequel l'oscillateur (37) est raccordé au contrepoids (33) au moyen d'un premier groupe de ressorts et est ainsi maintenu mobile par rapport au contrepoids (33), dans lequel l'oscillateur (37) peut être entraîné au moyen de l'entraînement vibrant, le contrepoids (33) est raccordé à la base de machine (38) au moyen du dispositif de suspension (3) et est ainsi maintenu mobile par rapport à la base de machine (38), dans lequel le dispositif de suspension (3) comprend une pluralité d'unités de suspension (4), dont chaque unité de suspension (4) présente un support (5), un ressort (6), une première partie de liaison à ressort (7) et une deuxième partie de liaison à ressort (8), dont le support (5) présente une première section d'extrémité de support (9) et une deuxième section d'extrémité de support (10), dans lequel le ressort (6) présente une première section d'extrémité de ressort (11) et une deuxième section d'extrémité de ressort (12), dans lequel les ressorts (6) des unités de suspension (4) forment un deuxième groupe de ressorts, dans lequel sur une unité de suspension respective (4) la première section d'extrémité de support (9) est couplée au moyen de la première partie de liaison à ressort (7) à la première section d'extrémité de ressort (11), la deuxième section d'extrémité de support (10) est raccordée à la base de machine (38) et la deuxième partie de liaison à ressort (8) est raccordée au contrepoids (33), dans lequel le transporteur à vibrations (2) est conçu comme un transporteur vibrant linéaire pour lequel, respectivement, une deuxième section d'extrémité de support (10) dans un plan de référence le traversant, qui est orienté transversalement à une direction longitudinale (L) du transporteur à vibrations linéaire, est disposé à l'extérieur de l'oscillateur (37) et en particulier à l'extérieur du contrepoids (33), **caractérisé en ce que** le contrepoids (33) présente deux joues (40) orientées dans une direction longitudinale (L) du transporteur à vibrations (2) orientées, espacées transversalement l'une de l'autre, dans lequel chacune des deux joues (40) présente sur un côté extérieur (44) de celle-ci un plan géométrique de joue (W_{E}) s'étendant au-delà de son côté extérieur (44), et que chacune des deuxièmes sections d'extrémité de support (10) est disposée latéralement à l'extérieur des deux plans de joue (W_{E}) sont disposés dans un espace intermédiaire bordé.

13. Transporteur à vibrations (2), comportant un oscillateur (37), un contrepoids (33), une base de machine (38), un dispositif de suspension (3) et un entraînement vibrant, dans lequel l'oscillateur (37) est raccordé au contrepoids (33) au moyen d'un premier groupe de ressorts et est ainsi maintenu mobile par rapport au contrepoids (33), dans lequel l'oscillateur (37) peut être entraîné au moyen de l'entraînement par vibration, dans lequel le contrepoids (33) est raccordée à la base de la machine (3) au moyen du dispositif de suspension (38) raccordé et ainsi maintenu mobile par rapport au socle de la machine (38), dans lequel le dispositif de suspension (3) comprend une pluralité d'unités de suspension (4), dont chaque unité de suspension (4) présente un support (5), un ressort (6), une première partie de liaison à ressort (7) et une deuxième partie de liaison à ressort (8), dans lequel le support (5) présente une première section d'extrémité de support (9) et une deuxième section d'extrémité de support (10), dont le ressort (6) comporte une première section d'extrémité de ressort (11) et une deuxième section d'extrémité de ressort (12), dans lequel les ressorts (6) des unités de suspension (4) forment un deuxième groupe de ressorts, dans lequel sur une unité de suspension respective (4) la première section d'extrémité de support (9) est couplée à la première section d'extrémité de ressort (11) au moyen de la première partie de liaison à ressort (7), la deuxième partie d'extrémité de support (10) est raccordée à la base de machine (38) et la deuxième partie de liaison à ressort (8) est raccordée au contrepoids (33), **caractérisé en ce que** le transporteur à vibrations (2) est conçu comme un transporteur à vibrations rond, dans lequel une deuxième section d'extrémité de support respective (10) dans un plan de référence la traversant, qui est orienté transversalement dans une direction circonférentielle (U) du transporteur à vibrations rond, est disposée à l'extérieur de l'oscillateur (37) et à l'extérieur du contrepoids (33) .

14. Transporteur à vibrations (2) selon une des revendications précédentes 12-13, **caractérisé en ce qu'**un support (5) respectif s'étend dans une section longitudinale de support (45), qui s'étend sur toute la longueur du ressort (6) qui lui est raccordé, dans une direction respective le traversant, jusqu'au plan de référence orienté transversalement dans la direction longitudinale (L) du transporteur à vibrations (2) dans toute la section de longueur de support (45) ou dans une partie prédominante de la section longitudinale de support (45) du côté de l'oscillateur (37) et notamment du côté du contrepoids (33) .

15. Transporteur à vibrations (2) selon une des revendications précédentes 12 et 14, **caractérisé en ce que** le dispositif de suspension (3) comprend deux modules de suspension (24), dans lequel chaque module de suspension (24) présente une première unité de suspension (4) et une deuxième unité de suspension (4), dans lequel il est notamment prévu que sur un module de suspension respectif (24) sur la première unité de suspension (4) et sur la deuxième unité de suspension (4) sur une partie de maintien (13) raccordée à la première section d'extrémité de support respective (9) ou sur la première section d'extrémité de support respective (9) un trou traversant fileté (26) est formé, dans lequel à travers chacun de ces trous traversants filetés (26) est vissé un élément de réglage fileté (27), en particulier une vis, et dans lequel un axe longitudinal géométrique respectif des éléments de réglage (27) s'étend dans son prolongement géométrique à travers l'oscillateur (37).

16. Transporteur à vibrations (2) selon une des revendications précédentes 12, 14 et 15, **caractérisé en ce que** chaque module de suspension (24) comporte une partie de liaison (31), dans lequel concernant un module de suspension respectif (24), la deuxième section d'extrémité de support (10) du support (5) de la première unité de suspension (4) est raccordée à la partie de liaison (31) sur un premier côté de la partie de liaison (31) et la deuxième section d'extrémité de support (10) du support (5) de la deuxième unité de suspension (4) est raccordée à la partie de liaison (31) sur un deuxième côté de la partie de liaison (31) opposé au premier côté, dans lequel il est notamment prévu que la partie de liaison (31) présente des trous traversants qui s'alignent avec les trous filetés dans la base de machine (38), dans lequel une vis est vissée dans un trou fileté à travers chaque trou traversant pour fixer la partie de liaison (31) à la base de machine (38).

17. Transporteur à vibrations (2) selon une des revendications précédentes 12, 14-16, **caractérisé en ce que** pour chaque unité de suspension (4), la deuxième section d'extrémité de support (10) du support (5) présente un segment de support (30) qui s'étend transversalement à l'axe longitudinal géométrique (L_{F}) du ressort (6), que entre le segment de support (30) et la deuxième partie de liaison à ressort (8) un interstice (34) est formé dans et **en ce que** à travers le segment de support (30) s'étend un trou traversant fileté (35) orienté transversalement à l'interstice (34), à travers lequel est vissé un élément de réglage fileté (36), en particulier une vis, de sorte qu'une extrémité libre de l'élément de réglage (36) dépasse en saillie à l'intérieur de l'interstice (34).

18. Transporteur à vibrations (2) selon une des revendications précédentes 12, 14 à 17, **caractérisé en ce que** chaque module de suspension (24) comprend une plaque de support (19) et que concernant un module de suspension respectif (24), le ressort (6) de la première unité de suspension (4) est raccordé à la plaque de support (19) sur un premier côté de la plaque de support (19) au niveau de sa deuxième section d'extrémité de ressort (12) au moyen de la deuxième partie de liaison à ressort (8) de la première unité de suspension (4) et le ressort (6) de la deuxième unité de suspension (4) au niveau de sa deuxième section d'extrémité de ressort (12) est raccordé au moyen de la deuxième partie de liaison à ressort (8) de la deuxième unité de suspension (4) à la plaque de support (19) sur un deuxième côté de la plaque de support (19) opposé au premier côté, et que le contrepoids (33) prend appui sur les plaques de support (19) des ensembles de suspension (24).

19. Transporteur à vibrations (2) selon une des revendications précédentes 12, 14-17, **caractérisé en ce qu'**un module de suspension respectif (24) comprend un premier dispositif de fixation (59) et un deuxième dispositif de fixation (59), que concernant un module de suspension respectif (24), le ressort (6) de la première unité de suspension (4) au niveau de sa deuxième section d'extrémité de ressort (12) est raccordé au premier dispositif de fixation (59) au moyen de la deuxième partie de liaison à ressort (8) de la première unité de suspension (4) et le ressort (6) de la deuxième unité de suspension (4) est raccordé au niveau de sa deuxième section d'extrémité de ressort (12) au moyen de la deuxième partie de liaison à ressort (8) de la deuxième unité de suspension (4) au deuxième dispositif de fixation et que le premier dispositif de fixation (59) est fixé, notamment vissé, au contrepoids (33) sur un premier côté du contrepoids (33), et le deuxième dispositif de fixation (59) est fixé au contrepoids (33), notamment vissé, sur un deuxième côté du contrepoids (33) opposé au premier côté.

20. Transporteur à vibrations (2) selon une des revendications précédentes 12-19, **caractérisé en ce que** l'entraînement vibrant est adapté à la génération d'une forme de mouvement oscillatoire de l'oscillateur (37), par lequel les marchandises transportées se trouvant sur l'oscillateur (37) sont excitées pour former des micro-jets, notamment des micro-jets de forme parabolique.

21. Transporteur à vibrations (2) selon une des revendications précédentes 12-20, **caractérisé en ce que** le transporteur à vibrations (2) présente une surface de guidage, en particulier au moins une piste de transport, pour les marchandises transportées, qui est fixée au vibrateur (37) et qui s'étend parallèlement à un plan d'installation du transporteur à vibrations (2), notamment horizontalement, dans lequel il est notamment prévu que des moyens de tri des marchandises sont fixés sur l'oscillateur (37).
